# EUROPEAN PATENT APPLICATION

(11) **EP 4 296 913 A1**
(43) Date of publication of application: **27.12.2023**
(21) Application number: 23180704.1
(22) Date of filing: 21.06.2023
(51) Int. Cl.: G06Q 10/00, G06Q 10/08, G06Q 10/0832, G06Q 10/0833, G06Q 10/0835

(54) **SYSTEM AND METHOD FOR DETERMINING THE ENVIRONMENTAL IMPACT AND SUSTAINABILITY SCORE OF A FOOD ITEM USING A FOOD INGREDIENT REPOSITORY**

(30) Priority: 21.06.2022 US 202263353861 P; 20.06.2023 US 202318211818
(71) Applicant: Nutritics Limited, Swords Dublin (IE)
(72) Inventor: O KELLY, Damian, Swords (IE); O KELLY, Ciaran, Swords (IE); HOGEN, Sinead, Swords (IE)
(74) Representative: FRKelly

(57) **Abstract**

Methods, devices, and system for determining and generating environmental impact and sustainability score (EISS) labels and certificates for a food item. A computing device may be configured to receive a food item description, determine one or more food ingredients based on the received food item description, determine a food ingredient EISS value for each of the determined food ingredients based on information retrieved from a food ingredient repository, and determine a food item EISS value based on the determined food ingredient EISS values. The computing device may generate an EISS label based on the determined food item EISS value, such as by generating an encrypted label information structure and/or an EISS digital certificate (EISSDC).

## Description

### RELATED APPLICATIONS

This application claims the benefit of priority to U.S. Provisional Application No. 63/353,861, entitled "System and Method for Determining the Environmental Impact and Sustainability Score of a Food Item using a Food Ingredient Repository" filed June 21, 2022, the entire contents of which are hereby incorporated by reference for all purposes.

### BACKGROUND

In recent years humankind has become extremely aware of the devastating negative impact of its actions on the health of our planet. This has resulted in many efforts, ranging from individuals to global organizations, to reduce, stop, and reverse harmful practices.

Food production and supply is one area that can have negative environmental impacts (e.g., ecological destruction, excess energy consumption, poor sustainability, high carbon footprint), but these environmental impacts can vary dramatically depending upon the food item. This has led to a growing demand to understand and reduce the environmental impacts of food production and supply, and food consumers are increasingly making food purchasing decisions based on environmental impacts and sustainability.

Indeed, some food items and recipes are already being labeled with scoring information relating to their environmental impact and sustainability, and this trend is likely to grow significantly as governments and food authorities introduce new food labeling requirements.

Consequently, many food producers and suppliers are currently developing sustainable business practices which include the calculation, labeling, publication, and reduction of the environmental impact and sustainability information for food items.

### SUMMARY

Various aspects include methods of determining an environmental impact and sustainability score (EISS) of a food item. In some aspects, the methods may include receiving, by a processor in a computing device, a food item description, determining one or more food ingredients based on the received food item description, determining a food ingredient EISS value for each of the determined food ingredients based on information retrieved from a food ingredient repository, determining a food item EISS value based on the determined food ingredient EISS values, and generating an EISS label based on the determined food item EISS value.

In some aspects, generating the EISS label based on the determined food item EISS value may include generating an encrypted label information structure, or generating an environmental impact and sustainability score digital certificate (EISSDC). In some aspects, generating the EISS label based on the determined food item EISS value may include generating the EISS label as a non-fungible token (NFT), or using a blockchain-based distributed ledger to secure the EISS label. In some aspects, generating the EISS label based on the determined food item EISS value may include determining environmental impact and sustainability unit types relevant to a requester, determining the label format associated with the requester, and generating the EISS label in the determined label format based on the determined food item EISS value and the determined environmental impact and sustainability unit types. In some aspects, generating the EISS label based on the determined food item EISS value may include determining a total cost of the food item based on cost information associated with each of the determined food ingredients, quantity information associated with each of the determined food ingredients, and one or more environmental impact and sustainability factors relating to energy consumption associated with the food item, and generating the EISS label to include the determined total cost of the food item.

In some aspects, the methods may include uploading the food item EISS label to a website or web server, the uploaded food item EISS label causing the website or web server to verify the authenticity of the item EISS label and automatically include the food item EISS label in an electronic listing in response to verifying the authenticity of the item EISS label.

In some aspects, determining the food ingredient EISS value for each of the determined food ingredients based on information retrieved from the food ingredient repository may include querying the food ingredient repository to retrieve matching food ingredients and EISS values associated with the matching food ingredients, applying one or more match rules to determine match levels for the retrieved matching food ingredients, and selecting the retrieved matching food ingredients with the highest match levels. In some aspects, applying the match rules to determine the match levels for the retrieved matching food ingredients may include applying at least two match rules that are cumulative and weighted. In some aspects, determining the food ingredients based on the received food item description further may include extracting food ingredient details from the determined food ingredients, parsing and segmenting the food ingredient details, and using the parsed and segmented food ingredient details to determine a food ingredient type, a food ingredient subtype, a food ingredient variation, a food ingredient preparation, a food ingredient quantity, or a food ingredient origin location, or using a machine learning technique in conjunction with image-based text analysis to determine the food ingredient type, the food ingredient subtype, the food ingredient variation, the food ingredient preparation, the food ingredient quantity, or the food ingredient origin location. In some aspects, determining the food ingredient EISS value for each of the determined food ingredients based on information retrieved from the food ingredient repository may include adjusting the food ingredient EISS values based on a match level, a food ingredient variation, a food ingredient preparation, a food ingredient quantity, or a food ingredient location.

In some aspects, determining the food item EISS value based on the determined food ingredient EISS values further may include generating an alert in response to determining that a description of at least one of the food ingredients may be not consistent or in response to determining that a quality metric of the food item EISS value may be below a threshold value. In some aspects, determining the food item EISS value based on the determined food ingredient EISS values further may include adjusting a food item mass value, a food item water consumption value, and a food item energy consumption value in response to determining that a food item preparation value indicates that the food item was cooked, and adjusting the food item EISS value based on the adjusted food item mass value, the adjusted food item water consumption value, and the adjusted food item energy consumption value. In some aspects, determining the food item EISS value based on the determined food ingredient EISS values may include determining a food item EISS value based on a gaseous emissions value, an energy consumption value, a water consumption value, a packaging value, a plastic content value, a biodiversity impact value, a fair trade value, an ethnical production value, a toxins value, an overproduction value, or an end-of-life handling value, or adjusting the food item EISS value based on a food item preparation, a food item packaging, a food item logistic, or a food item location.

Further aspects may include a computing device having a processor configured with processor-executable instructions to perform various operations corresponding to the methods discussed above.

Further aspects may include a computing device having various means for performing functions corresponding to the method operations discussed above.

Further aspects may include a non-transitory processor-readable storage medium having stored thereon processor-executable instructions configured to cause a processor to perform various operations corresponding to the method operations discussed above.

### BRIEF DESCRIPTION OF THE DRAWINGS

The accompanying drawings, which are incorporated herein and constitute part of this specification, illustrate exemplary aspects of the invention, and together with the general description given above and the detailed description given below, serve to explain the features of the invention.
FIGs. 1A-1F are block diagrams that illustrate different examples of environmental impact and sustainability score (EISS) labels according to the various embodiments.
FIGs. 2A-2C are block diagrams that illustrate an example label information structure that may be used to generate EISS label and/or an environmental impact and sustainability score digital certificate (EISSDC) in accordance with some embodiments.
FIG. 2D is a block diagram that illustrates a table containing match rules and associated contributions to the match level for a food ingredient according to an example embodiment.
FIGs. 3A-3C are process flow diagrams illustrating a method of calculating the EISS value of a food ingredient using a food ingredient repository in accordance with some embodiments.
FIGs. 4A-4C are block diagrams that illustrate various examples of graphical user interfaces for calculating the EISS value of a food ingredient using a food ingredient repository according to the various embodiments.
FIGs. 5A-5D are process flow diagrams illustrating a method of calculating the EISS values of a food item using a food ingredient repository in accordance with some embodiments.
FIGs. 6A-6D are block diagrams that illustrate examples of graphical user interfaces for calculating the EISS value of a food item using a food ingredient repository according to the various embodiments.
FIGs. 7A-7C are block diagrams that illustrate various examples of graphical user interfaces for viewing and ordering food items containing EISS labels and/or EISSDCs according to the various embodiments.
FIG. 8 is a process flow diagram illustrating a method of monitoring the EISS value of a food item in accordance with some embodiments.
FIGs. 9A and 9B are block diagrams that illustrate an example report containing the EISS values for food items according to the various embodiments.
FIGs. 10A and 10B are process flow diagrams illustrating a method of making recommendations for improving the EISS values of a food item in accordance with some embodiments.
FIGs. 11A-11C are process flow diagrams illustrating methods of determining the EISS value of a food item using a food ingredient repository in accordance with various embodiments.
FIG. 12A is a communication system block diagram illustrating network components of an example communication system suitable for implementing some embodiments.
FIG. 12B is a component block diagram illustrating example components in an environmental impact and sustainability (EIS) server suitable for implementing some embodiments.
FIG. 13 is a component diagram of a computing system suitable for implementing the various embodiments.
FIG. 14 is a component diagram of a mobile computing device suitable for implementing various embodiments.
FIG. 15 is a component diagram of a server suitable for implementing the various embodiments.

### DESCRIPTION

The various embodiments will be described in detail with reference to the accompanying drawings. Wherever possible, the same reference numbers will be used throughout the drawings to refer to the same or like parts. References made to particular examples and implementations are for illustrative purposes and are not intended to limit the scope of the invention or the claims.

The word "exemplary" is used herein to mean "serving as an example, instance, or illustration". Any implementation described herein as "exemplary" is not necessarily to be construed as preferred or advantageous over other implementations.

The term "food ingredient" is used herein to refer to an information structure or information unit that identifies a basic food ingredient that may be mixed or combined with other food ingredients (e.g., regular milk, banana, flour).

The term "food item" is used herein to refer to an information structure or information unit that identifies an item of processed (e.g., baked, cooked, mixed, combined) food that is ready to be consumed by a human (e.g., tuna sandwich, burger, chocolate chip ice-cream). A food item may contain one or more food ingredients. A food item may be a food ingredient within another food item (e.g., the chocolate chip food item may be composed of cacao, milk, sugar, etc., and it may be found in the cookie food item). Further, a food item may be a collection of other food items that form a dish or meal (e.g., a burger, chips, and beer).

The terms "manufacturer", producer", "processor", and "supplier" may be used herein to refer to an entity that makes, prepares, distributes, or sells food items.

The term "computing device" may be used herein to refer to any one or all of server computing devices, personal computers, laptop computers, tablet computers, edge devices, user equipment (UE), multimedia Internet-enabled cellular telephones, smartphones, smart wearable devices (e.g., smart watch, smart glasses, fitness tracker, clothes, jewelry, shoes, etc.), Internet-of Things (IoT) devices (e.g., smart televisions, smart speakers, smart locks, lighting systems, smart switches, smart doorbell cameras or security systems, etc.), connected vehicles, and other similar devices that include a memory and programmable processor for providing the functionality described herein.

The terms "machine learning", "machine learning technique", "machine learning algorithm" and "AI model" may be used herein to refer to a wide variety of information structures that may be used by a computing device to perform a computation or evaluate a specific condition, feature, factor, dataset, or behavior on a device. Examples of machine learning algorithms include network models, neural network models, inference models, neuron models, classifiers, random forest models, spiking neural network (SNN) models, convolutional neural network (CNN) models, recurrent neural network (RNN) models, deep neural network (DNN) models, generative network models, ensemble networks, generative adversarial networks, and genetic algorithm models. In some embodiments, a machine learning algorithm may include an architectural definition (e.g., the neural network architecture, etc.) and one or more weights (e.g., neural network weights, etc.).

The term "inference" may be used herein to refer to a process that is performed at runtime or during the execution of the software application program corresponding to the machine learning algorithm. Inference may include traversing the processing nodes in the network along a forward path (which may contain some backward traversals) to produce one or more values as an overall activation or overall "inference result".

Currently, many manufacturers, producers, suppliers, and sellers of food items are trying to create environmental impact and sustainability information for their food items (e.g., as part of "Life Cycle Assessment" (LCA) according to a standard such as ISO 14040/44, ISO 14067, PAS 2050, or GHG Product Life Cycle Standard). This is a complex process. It is often done manually, which may be costly, time-consuming, and complex.

The environmental impact and sustainability information may include one or more "scores." A score may be an information unit or value that represents a single environmental impact and sustainability factor, or it may represent a combination of scores for different environmental impact and sustainability factors (e.g., the sum, a weighted combination). One or more labels containing scores for a food item may appear on its packaging, as part of a recipe, as part of advertising or sales materials (printed or electronic (e.g., in an app on a smartphone, on a website)), or in association with it on a menu (printed or electronic (e.g., in an app on a smartphone, on a website)). Scores may be represented in different formats in order to make them easier to understand (e.g., as a percentage, on a color scale, on an alphabetic scale (e.g., A-F, where A is the best and F is the worst), using different numbers of icons or images, using different styles of icons or images).

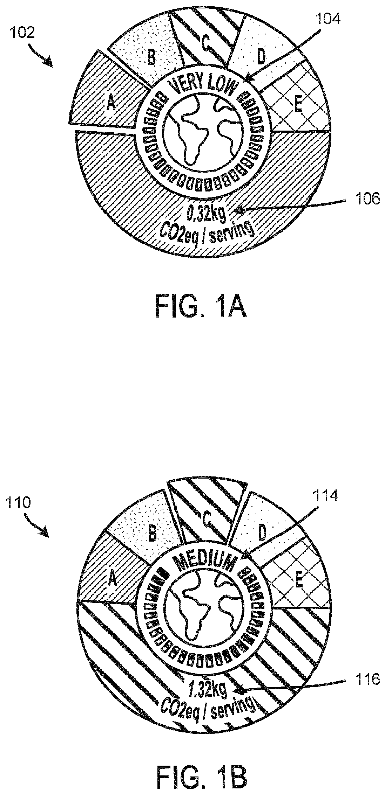

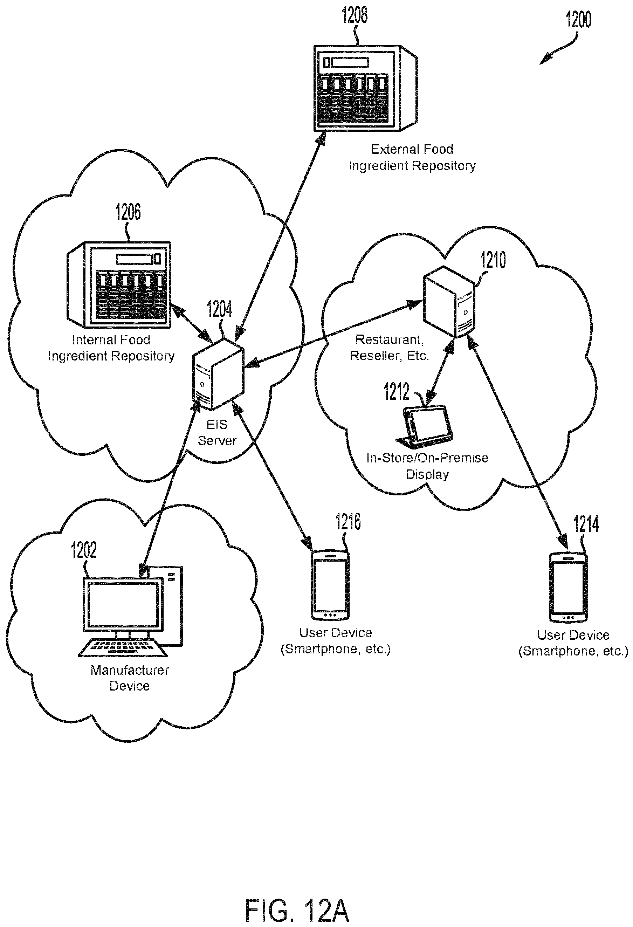

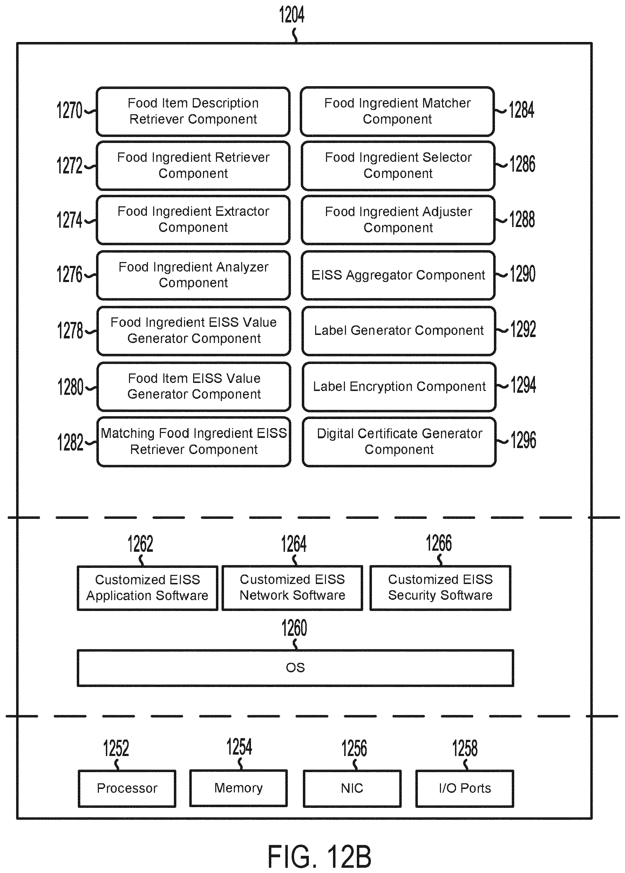

FIGs. 1A-1F illustrate different examples of environmental impact and sustainability score (EISS) labels 102, 110, 120, 130, 140, 150, 160 according to the various embodiments. Some embodiments may include computing devices (e.g., EIS server 1204 illustrated in FIGs. 12A and 12B, etc.) configured to generate the EISS labels 102, 110, 120, 130, 140, 150, 160 as encrypted label information structures or encrypted digital certificates.

FIG. 1A illustrates an EISS label 102 that includes an alphabetic and color scale on the top. The alphabetics are represented by letters A-E and the different colors are represented by different shadings, line patterns or fill patterns in FIG. 1A. The EISS label 102 also includes a simple descriptive summary 104 in the center (i.e., "very low"), and a color-coded actual value of carbon dioxide per serving 106 at the bottom for a food item with a good EISS value. The different colors representing the color-coded values are represented in FIG. 1A via different shadings, line patterns or fill patterns (e.g., in the portions labeled A, B, C, D, E, etc.).

FIG. 1B illustrates a similar EISS label 110 for a food item with a poor EISS value. For example, the descriptive summary 114 in the center of the label 110 is "medium" and the value of carbon dioxide per serving 116 is 1.32kg.

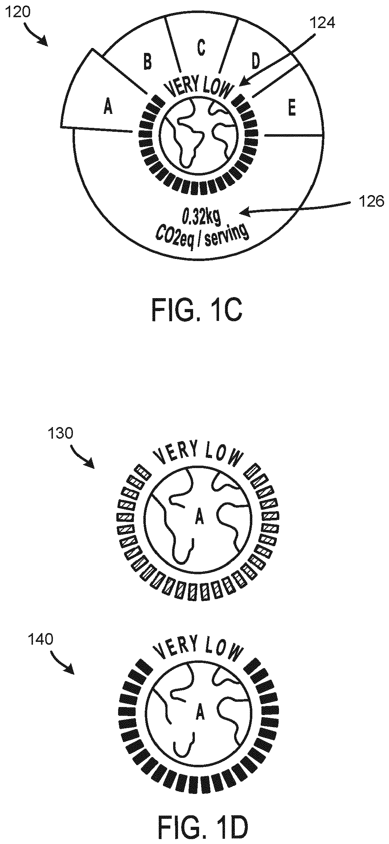

FIG. 1C illustrates an EISS label 120 for a food item with a good EISS value. Similar to the examples in FIGs. 1A and 1B, the label 120 includes a simple descriptive summary 124 in the center (i.e., "very low") and the actual value of carbon dioxide per serving 126 at the bottom for a food item with a good EISS value. However, unlike the examples in FIGs. 1A and 1B, label 120 does not use colors to represent the scores. As such, label 120 may be better suited for printing on low-resolution or greyscale food packaging.

FIG. 1D illustrates two compact EISS labels 130, 140 for food items with good EISS values that are suitable for printing or including in locations with limited space (e.g., as part of a menu item). In particular, label 130 is a color label and label 140 is a grayscale label. It should be understood that the color of label 130 is represented via the diagonal line/fill pattern in FIG. 1D.

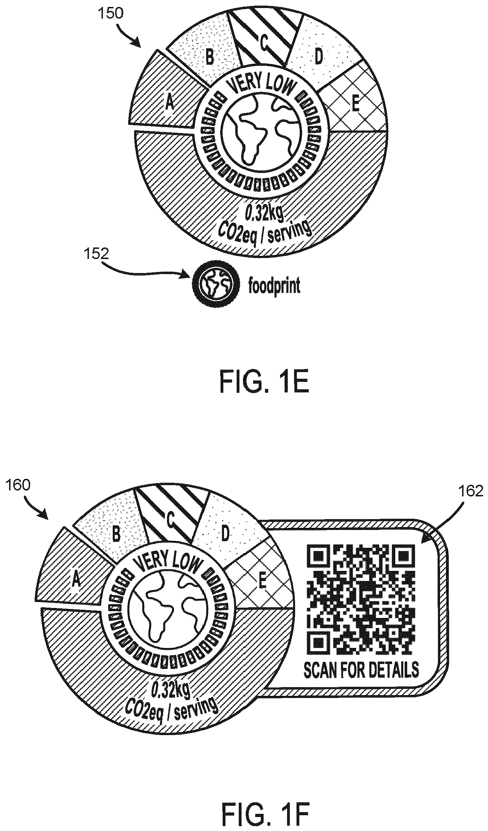

FIG. 1E illustrates an EISS label 150 for a food item with a good environmental impact and sustainability score that also contains a logo 152 (e.g., representing a standard or certification process).

FIG. 1F illustrates an EISS label 160 for a food item with a good environmental impact and sustainability score that also includes a 2D barcode 162 (e.g., a QR code). This barcode 162 may be scanned using a computing device, whereupon it may cause the computing device to display additional information relating to the environmental impact and sustainability score. This additional information may include equivalency examples (e.g., the time spent in a shower may be used as an equivalency example for water consumption, and the distance traveled by an average car may be used for carbon dioxide equivalency examples).

Some embodiments may include a computing system configured to generate a unique Environmental Impact and Sustainability Score Digital Certificate (EISSDC). The EISSDC may include detailed data about a food item, its food ingredient details, its environmental impact and sustainability factors, its environmental impact and sustainability score details, and/or its EISS labels.

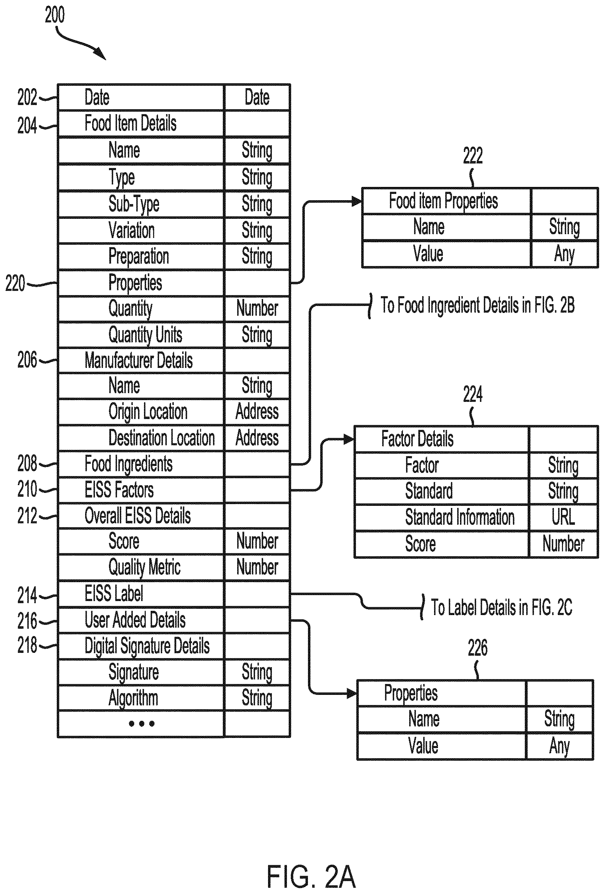

FIGs. 2A-2C illustrate a label information structure 200 that could be encrypted and/or otherwise used to generate an environmental impact and sustainability score digital certificate (EISSDC) in accordance with various embodiments. In some embodiments, each EISSDC may be secured with a cryptographic signature. In some embodiments, an EISSDC may be secured using keys tied to the food manufacturer or a trusted third party (e.g., a food authority, etc.). In some embodiments, the EISS labels may be embedded within the EISSDC and cryptographically signed with the same or different keys as the EISSDC.

In the various embodiments, the EISSDCs may be generated, encrypted, secured, and/or communicated using any of a variety of techniques or technologies that ensure data integrity, authenticity, confidentiality, etc. Examples of such techniques or technologies include secure multi-party computation (SMPC), secure hash algorithms, public key infrastructure (PKI), attribute-based encryption (ABE), homomorphic encryption, zero-knowledge proofs (ZKP), digital watermarking, data diodes, and other similar techniques or technologies known in the art.

In some embodiments, the EISSDC may be secured using a distributed ledger technology (DLT) (e.g., added to a blockchain, etc.) and/or may be made available as a non-fungible token (NFT). In some embodiments, a processor in a computing device may be configured to generate and secure an EISSDC as an NFT on a blockchain-based distributed ledger. For example, the processor may establish a connection to a blockchain network and create a smart contract that includes functionalities for minting NFTs, transferring ownership of NFTs, accessing metadata associated with the NFTs, etc. on the blockchain network. The processor may receive details of the food item and its ingredients, extract details of the ingredients, determine food ingredient EISS values based on the extracted details, determine a food item EISS value based on the determined food ingredient EISS values, generate a label information structure that includes the received and/or generated information, generate a unique identifier for the NFT (e.g., based on a hash of the received data, calculated scores, a unique serial number, etc.), use the smart contract to create the NFT on the blockchain network, cryptographically sign the NFT using a private key of an authorizing entity, and broadcast the signed NFT to the blockchain network. Cryptographically signing the NFT may guarantee its authenticity, and upon validation by nodes of the network, the NFT may be added to a block in the blockchain, thereby making the NFT a securely stored and immutable part of the blockchain. The processor may then send the blockchain address associated with the NFT to a requesting entity. The blockchain address may allow the requesting entity to access and interact with the NFT.

For ease of reference and to focus the discussion on the most relevant features, some of the embodiments below are discussed with reference to an "environmental impact and sustainability score label," "EISS label," or simply "label." However, it should be understood that these terms encompass not only the labels (e.g., 102, 110, 120, 130, 140, 150, 160 in FIGs. 1A-1F) but also the label information structures (e.g., 200 in FIGs. 2A-2C) and EISSDCs. It should also be understood that a label information structure (e.g., 200 in Figures 2A-2C) may be used to create or represent an EISSDC or an EISS label (e.g., 102, 110, 120, 130, 140, 150, 160 in FIGs. 1A-1F). It should also be understood that an EISSDC may be or may include an encrypted version of these labels and/or label information structures (e.g., 200 in Figures 2A-2C).

In the examples illustrated in FIGs. 2A-2C, the label information structure 200 includes a date information element (IE) 202, a food item details IE 204, a manufacturer details IE 206, a food ingredients IE 208, an EISS factors IE 210, an overall EISS details IE 212, an EISS label IE 214, a user added details IE 216, and a digital signature details IE 218. The food item details IE 204 may include a name IE, a type IE, a sub-type IE, a variation IE, a preparation IE, a properties IE 220, a quantity IE, and a quantity units IE. The manufacturer details IE 206 may include a name IE, an origin location IE, and a destination location IE. The overall EISS details IE 212 may include a score IE and a quality metric IE. The digital signature details IE 218 may include a signature IE and an algorithm IE.

In the examples illustrated in FIGs. 2A-2C, the properties IE 220 of the food item details IE 204, the food ingredients IE 208, the EISS factors IE 210, the EISS label IE 214 and the user added details IE 216 all include a child data structure, each of which may be repeated zero-to-many times. For example, the properties IE 220 includes a child data structure 222 that includes a food item properties IE that includes a name IE, and a value IE. The EISS factors IE 210 includes a child data structure 224 that includes a factor details IE that includes a factor IE, a standard IE, a standard information IE, and a score IE. The user added details IE 216 includes a child data structure 226 that includes a properties IE that includes a name IE and a value IE.

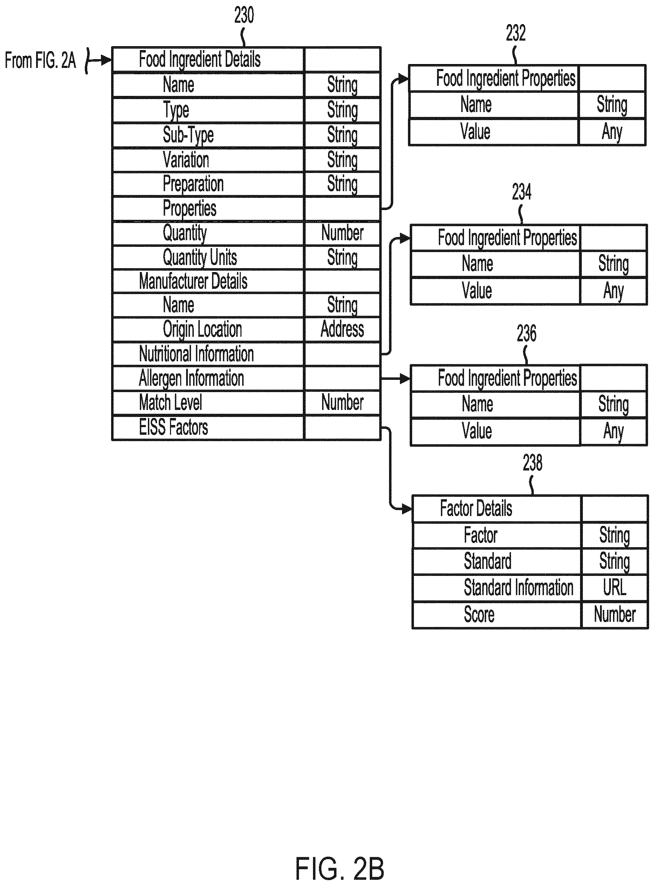

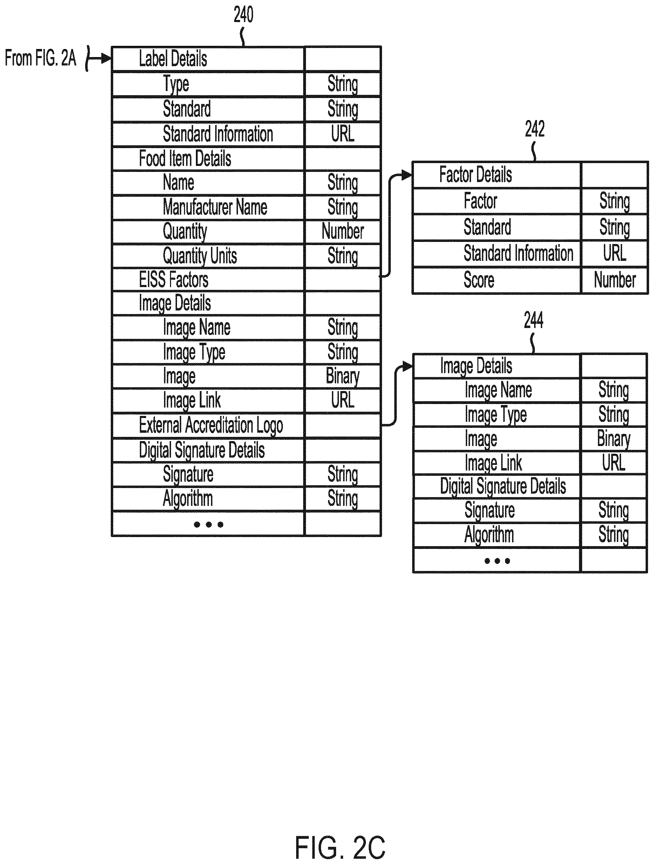

With reference to FIGs. 2A and 2B, the food ingredients IE 208 includes a child data structure 230 that includes further child data structures 232-238 (e.g., grandchild data structures). Similarly, FIGs. 2A and 2C illustrate that the EISS label IE 214 includes a child data structure 240 that includes further child data structures 242 and 244.

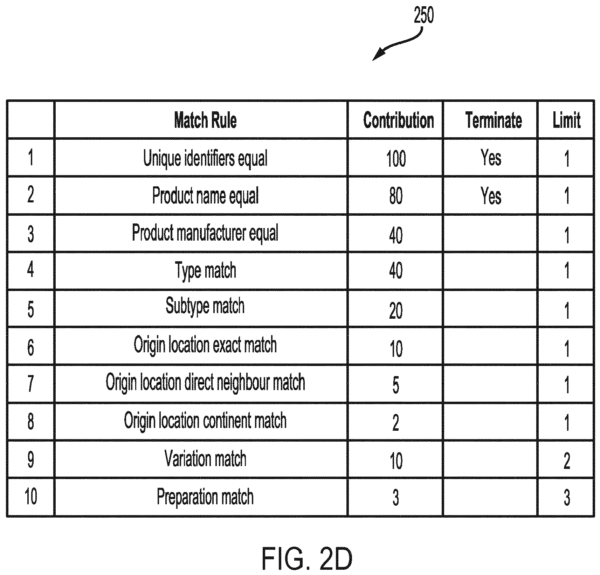

FIG. 2D illustrates a table information structure 250 that includes match rules and associated contributions to the match level for a food ingredient according to an example embodiment. Match rules 1 and 2 may both cause the process to terminate. Match rules 6, 7, and 8 relate to the original location of the food ingredient. These may be evaluated in ascending order, and they are grouped so that only one of them may contribute to the match level. Rule 9 may be evaluated for each food ingredient variation, but its maximum contribution to the match level is limited to 20 (i.e., 10x2). Similarly, rule 10 may be evaluated for each food ingredient preparation, but its maximum contribution to the match level is limited to 9 (i.e., 3x3). Therefore, if a food ingredient has a matching type and subtype, is sourced from an origin country that is a direct neighbor of the requester's country, has a single variation match, and has two preparation matches, then its match level may be 81 (i.e., 40+20+5+(10x1)+(3x2)).

The match rules may be configured so that a generic default match rule is evaluated if all other match rules fail (e.g., the match rule may be based on only the food ingredient type).

As mentioned above, environmental impact and sustainability information may include one or more "scores," which may be an information unit or value that represents one or more environmental impact and sustainability factors.

Environmental impact and sustainability factors may relate to gaseous emissions or greenhouse gas emissions (e.g., how much carbon dioxide, nitrous oxide, methane, etc. was produced as a result of producing the food item), energy consumption (e.g., how much energy was required as a result of producing the food item), water consumption (e.g., how much water was consumed as a result of producing the food item), packaging (e.g., how much of the food item's packaging is recyclable and/or compostable), plastic content (e.g., how much plastic is contained within the food item as a result of plastics being absorbed into the food chain), biodiversity impact, fair trade and ethnical production (e.g., is a fair and non-exploitive price paid for raw ingredients that are sourced from developing countries), toxins (e.g., how many toxins are contained within the food item as a result of toxins being absorbed into the food chain), climate change, ozone depletion, ionizing radiation, photochemical ozone formation, respiratory inorganics, non-cancer human health effects, cancer human health effects, acidification terrestrial and freshwater, eutrophication freshwater, eutrophication marine, eutrophication terrestrial, ecotoxicity freshwater, land use, water scarcity, natural resource use (e.g., minerals, metals), biodiversity loss land occupation, biodiversity loss land transformation, biodiversity loss total land use effects, damage to freshwater ecosystems, damage to freshwater ecosystems - freshwater ecotoxicity, damage to freshwater ecosystems - freshwater eutrophication, damage to freshwater ecosystems - water stress, damage to marine ecosystems - marine ecotoxicity, damage to marine ecosystems - marine eutrophication, damage to terrestrial ecosystems, damage to terrestrial ecosystems - land occupation, damage to terrestrial ecosystems - land transformation, eutrophication potential, freshwater ecotoxicity potential (PAF), scarcity weighted water use, and terrestrial acidification potential.

The various embodiments may include computing devices configured to evaluate the ecological footprint of a food item based on a variety of environmental impact and sustainability factors. For example, a computing device may be configured to evaluate any or all of the gaseous or greenhouse gas emissions produced during food production, the energy consumption required for food production, water consumption during food production, the recyclability or compostability of the food item's packaging, the plastic content in the food due to absorption into the food chain, biodiversity impact, fair trade and/or ethical production considerations (e.g., fair pricing for raw ingredients sourced from developing countries, and/or the toxin content in the food due to absorption into the food chain. The computing device may also be configured to evaluate any or all of a variety of additional factors discussed above, such as ozone depletion, ionizing radiation, ozone formation, respiratory inorganic substances, human health effects, acidification, eutrophication, ecotoxicity, land use, water scarcity, natural resource use, damages to various ecosystems, etc.

Some embodiments may utilize a food ingredient repository (also known as an eco-database) that contains information about the environmental impact and sustainability factors of the food ingredients. Obtaining accurate and appropriate information relating to the food ingredients, normalizing it, and maintaining it in a food ingredient repository, is costly, time-consuming, and complex. Typically, the information is obtained from multiple data sources (e.g., industry journals, academic papers, and manufacturers' data), and there may be conflicting information that needs to be homogenized. Further, allowances and adjustments need to be made for the origin of the food (e.g., fruit grown in warmer dry environments may require more water and less energy than fruit grown in cooler wet environments), variables in production, processing techniques, transport requirements and distances, packaging techniques and materials, and preservation techniques.

The food ingredient repository may represent food ingredients in a hierarchical manner that forms a taxonomy (e.g., using a tree data structure) whereby each food ingredient can have a type or category and one or more subtypes, and food ingredients may have one or more properties. Each food ingredient may inherit all of the properties of its ancestor food ingredients (e.g., a "red grapes" subtype may inherit the properties of a "grapes" subtype, which may inherit the properties of a "fruit" type). The food ingredient repository may store information regarding variations of the same food ingredient (e.g., a single food ingredient may be fresh, dried, or canned, and this may impact its EISS value). Further, the same food ingredient from different manufacturers or processors may have very different EISS values.

The food ingredient repository may include representative images for the food ingredients. The food ingredient repository may include nutritional information (e.g., energy content, sugar content, fat content) for the food ingredients. The food ingredient repository may include pricing/costing information for the food ingredients. The food ingredient repository may include allergen information (e.g., information relating to gluten, suitability for vegetarians, suitability for vegans) for the food ingredients. Finally, the food ingredient repository may include storage instructions (e.g., storage temperature) and expiry or shelf life information (e.g., a time period for which the food ingredient stays fresh) for the food ingredients.

The food ingredient repository may contain information about the source of the food ingredient details (e.g., from a certified national database, from the food ingredient manufacturer, crowdsourced). In an embodiment, a user may create a customized food ingredient repository by specifying two or more sources that are aggregated together in order to form the customized food ingredient repository. This may be necessary to ensure consistency and stability at different times. It may also be necessary to comply with public or standardized initiatives (e.g., the "Cool Food Pledge" mandates using public data points only, and the "LIFE Climate Smart Chef" mandates using only the "SuEatable LIFE" database).

The food ingredient repository may utilize one or more application programming interfaces (APIs) in order to automatically obtain information about the environmental impact and sustainability factors of the food ingredients from an external source (e.g., the HESTIA database).

The user may add his/her own food ingredient information to the food ingredient repository. In an embodiment, the environmental impact and sustainability factors for a food ingredient entered by a user may be compared against the environmental impact and sustainability factors for similar food items in order to ensure that they are within plausible limits (e.g., if the environmental impact and sustainability factor relating to carbon dioxide emissions for 1kg of beef typically ranges from 50kg to 70kg, and if the user entered an environmental impact and sustainability factor relating to carbon dioxide emissions of 20kg for 1kg of beef, then this would be determined to be outside of the plausible limits). If the environmental impact and sustainability factors for the food ingredient are not within the plausible limits then this may be brought to the user's attention (e.g., using an alert message in a graphical user interface) and the food ingredient may not be added to the food ingredient repository. The environmental impact and sustainability factors for a food ingredient may not be within the plausible limits either due to an unintentional user error (e.g., the user is using the wrong units) or due to a user trying to intentionally manipulate environmental impact and sustainability factors for food ingredients and consequently food items.

The food ingredient repository may contain Life Cycle Assessment (LCA) boundary information for the food ingredients that determines the scope of the EISS value (e.g., full lifecycle of the food ingredient, "cradle to farm gate", regional distribution center, "cradle to grave").

Thus, as discussed above, in some embodiments, the computing devices may be configured to generate, maintain, and/or use a food ingredient repository that stores information about the environmental impact and sustainability factors of food ingredients. In some embodiments, the food ingredient repository may be structured or organized in a hierarchical manner, creating a classification system in which each food ingredient belongs to a specific type, category, or subtype. The food ingredient repository may also be structured or organized to allow each ingredient's properties to be passed down to its subordinate ingredients and/or to accommodate information about different variations of the same food ingredient. The food ingredient repository may include representative images, nutritional information, pricing/costing information, allergen information, storage instructions, shelf life information for the food ingredients, etc. In some embodiments, the food ingredient repository may include a record of the source of the food ingredient details (e.g., from a certified national database, the food ingredient manufacturer, crowdsourced, etc.). In some embodiments, the computing device and/or food ingredient repository may be configured to automatically obtain information about the environmental impact and sustainability factors of the food ingredients via APIs to external sources (e.g., HESTIA database, etc.).

The various embodiments may utilize a web application (which may be hosted in the cloud), and the web application may contain profiles that are associated with users (also referred to as requesters).

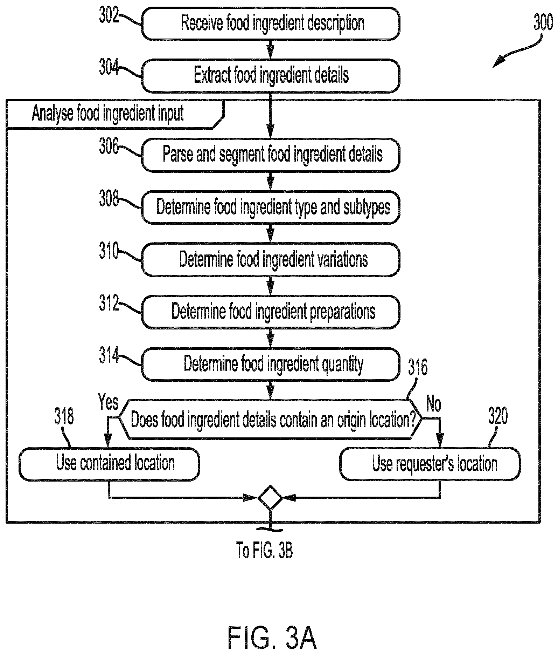

FIGs. 3A-3C illustrate a method 300 of calculating the EISS value of a food ingredient using a food ingredient repository in accordance with some embodiments. Method 300 may be performed in a computing device (e.g., EIS server 1204, etc.) by any or all of the processing units (e.g., processor 1252, 1310, 1312, 1314, 1316, 1318, 1321, 1322, 1321, 1322, etc.) computing subsystems, or components (e.g., components 1270-1296, etc.) discussed in this application. Means for performing the functions of method 300 may include any or all of the processing units (e.g., processor 1252, 1310, 1312, 1314, 1316, 1318, 1321, 1322, 1321, 1322, etc.), computing subsystems, or components (e.g., components 1270-1296, etc.) discussed in this application.

With reference to FIG. 3A, in block 302, the processor may receive a description of the food ingredient. This may be unstructured data that contains details of the food type and/or subtype, variations of the food type, preparation or state details relating to the food ingredient, and a quantity of the food ingredient. The food ingredient description may be text that was input by the requester (e.g., "500ml fresh low-fat milk"), an image (e.g., a photo of a recipe captured using a mobile phone, a photo of the food ingredient (which may also contain the packaging)), or a barcode (e.g., a Universal Product Code (UPC)).

In block 304, the processor may extract the details of the food ingredient from the food ingredient description. For example, if the food ingredient description was an image containing text (e.g., a photo of a recipe, a photo of the food ingredient containing packaging), then the processor may extract the text (e.g., using image-based text analysis, etc.). If the food ingredient description was an image containing a photo of the food ingredient, the processor could use machine learning techniques to identify the food ingredient. The processor may also use machine learning techniques to determine variations of the food ingredient (e.g., "chopped", "flaked", or "whole" in the context of almonds). If the food ingredient description was an image containing a barcode of the food ingredient, the processor may extract the barcode and convert it to a numeric value. The processor may use the numeric value as a key to look up the food ingredient details in an external database or repository.

Thus, in block 304, the processor may extract the food ingredient details. If the input type is text, the processor may extract details directly from the text. For example, the processor may use natural language processing (NLP) techniques to extract relevant details from the description, which may include parsing the text, identifying key phrases or words that indicate the type of food, its state, the quantity, etc. If the input type is an image, the processor may determine whether the image includes text, a photo, or a barcode. If the image contains text, the processor may use image-based text analysis, such as optical character recognition (OCR), to extract details/text from the image. If the image includes a photo of the food ingredient, the processor may use machine-learning techniques such as deep learning models trained for image classification to identify the ingredient details. If the image contains a barcode, the processor may extract the barcode, convert it to a numeric value, and use it as a key to look up the food ingredient details in an external database.

Examples of extracted food ingredient details include "500ml fresh low-fat milk", "Nutella 3 tablespoons", "organic carrots 2kg", "4 hard-boiled free-range eggs", "5kg of peeled Rooster potatoes", "8 ripe Seville oranges", "One can of beans in sauce".

In blocks 306-320, the processor may analyze the extracted food ingredient details. For example, in block 306, the processor may parse the extracted food ingredient details and segment them into separate words or word-groups.

In block 308, the processor may determine the food ingredient type and subtype(s) (e.g., "milk" and "low-fat" in the extracted food ingredient details relating to milk, "potato" and "Rooster" in the extracted food ingredient details relating to potatoes). If the extracted food ingredient details contain a product name and/or the product manufacturer, then these may be used to identify the food ingredient type and subtype (e.g., "Nutella" in the extracted food ingredient details could be used to identify the food ingredient type as "spread" and the subtype as "chocolate").

In some embodiments, in blocks 306 and 308, the processor may preprocess the food ingredient details extracted in block 304 to normalize the data, remove special characters, convert the text to lowercase, and/or perform other similar operations to streamline the text analysis operations. The processor may then use NLP techniques to parse the pre-processed text, which may include breaking down the pre-processed text into smaller components (tokens), such as words or phrases. The processor may compare each word or phrase to a pre-defined list or dictionary of known food types and subtypes. The list may include terms such as "milk", "low-fat", "potato", "rooster" (a type of potato), etc.

In some embodiments, the processor may use machine learning algorithms to predict the food type and subtype for tokens or parsed data that are not clear (e.g., due to a smear on the label, due to a fold in the packaging) and/or for terms that are not in the dictionary.

In some embodiments, the processor may determine whether the extracted food ingredient details include specific product names or manufacturer details. If so, the processor may search a database of known products and/or manufacturers to find a match for the given product name or manufacturer and use these additional details to identify the food type and subtype more accurately.

In block 310, the processor may determine the food ingredient variations (e.g., "organic" in the extracted food ingredient details relating to carrots, "free-range" in the extracted food ingredient details relating to eggs). The extracted food ingredient variation may be homogenized as part of this operation (e.g., the "can" in the extracted food ingredient details relating to beans may be treated as a synonym of "tinned").

In block 312, the processor may determine the food ingredient preparations (e.g., "hard-boiled" in the extracted food ingredient details relating to eggs, "peeled" in the extracted food ingredient details relating to potatoes).

In some embodiments, in blocks 310 and/or 312, the processor may apply the parsed or pre-processed text (or split the food ingredient details into individual words or groups of words) to pre-trained NLP models to identify words that correspond to known variations of food ingredients (e.g., "organic", "free-range", etc.) and/or determine the food ingredient preparations (e.g., "hard-boiled", "peeled", "diced", "sliced", etc.), and standardize the identified variations to maintain consistency (e.g., treat the words "tinned" and "canned" as synonyms, etc.).

In block 314, the processor may determine the food ingredient quantity (e.g., mass, volume). In some embodiments, the processor may determine the food ingredient quantity based on information included in the extracted food ingredient details (or homogenized versions of the food ingredient details (e.g., converted from imperial units to metric units)). In some embodiments, the processor may derive the food ingredient quantity from an alternative measurement (e.g., tablespoons would be converted to grams in the extracted food ingredient details relating to Nutella, the quantity would be converted to grams based on mean values in relation to the extracted food ingredient details relating to eggs). In some embodiments, the processor may use machine learning techniques to determine the food ingredient quantity. For example, if the food ingredient description was an image containing a photo of the food ingredient (with reference to block 304), then machine learning techniques may be used to perform image-based text analysis on the food ingredient packaging in order to determine its quantity (i.e., both the amount and the units). Additionally, machine learning techniques may be used on an image of the food ingredient in order to determine the quantity of the food ingredient in the units that are most appropriate for the type of food ingredient (e.g., volume for milk, a number value for oranges). In an embodiment, images of food ingredients containing packaging may be used to train the machine learning models to determine the quantity of the food ingredient in images that do not contain any packaging.

Thus, in block 314, the processor may determine food ingredient quantity. In some embodiments, as part of these operations in block 314, the processor may determine whether the quantity is included in the extracted food ingredient details (extracted in block 304), whether the quantity needs to be derived from an alternative measurement, and/or whether the food ingredient description is an image. If the quantity is in the extracted food ingredient details, the processor may homogenize the data (e.g., convert from imperial units to metric units, etc.). If quantity needs to be derived from an alternative measurement (e.g., tablespoons converted to grams), the processor may perform any of a variety of different conversion operations to derive the quantity. If the food ingredient description is an image, the processor may use machine learning techniques to determine the quantity.

In determination block 316, the processor may determine whether the extracted food ingredient details include an origin location. In response to determining that the extracted food ingredient details include an origin location (i.e., determination block 316 = "Yes") (e.g., "Seville" in the extracted food ingredient details relating to oranges), the processor may use the origin location as the location in block 318. In some embodiments, the processor may homogenize the location (e.g., "Seville" may be homogenized to "Spain"). In some embodiments, the processor may homogenize the location using a location application programming interface (API). In response to determining that the extracted food ingredient details do not contain an origin location (i.e., determination block 316 = "No"), the processor may use the requester's location as the origin location in block 320. In some embodiments, the processor may obtain the requester's location from a profile associated with the requester, by performing a geo-lookup using the requester's IP address, by querying the requester's computing device, etc.

After blocks 306-320 have been completed, the food ingredient may be represented using a data structure (e.g., a food ingredient information structure, a label information structure 200, EISSDC, etc.) containing the food ingredients type, subtype, variations, preparations, quantity, and location (e.g., [type="milk", sub-type="low-fat", variations={}, preparations={}, quantity=500ml, location="Ireland"]). In some embodiments, the data structure may be an EISS label or a EISSDC.

In some embodiments, the processor may use natural language processing and named entity recognition (NER) as part of blocks 306-318. For example, the food ingredient types and subtypes, variations, preparations, and quantities may all typically contain words from relatively small sets. Further, words that are deemed to be insignificant may be discarded without attempting to attribute semantic value to them (e.g., "fresh" in the extracted food ingredient details relating to milk, "of" in the extracted food ingredient details relating to carrots).

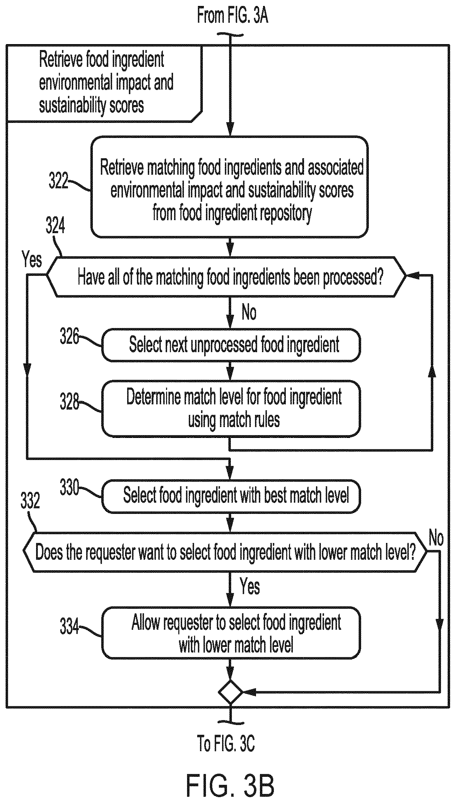

With reference to FIG. 3B, in blocks 322-334, the processor may retrieve the EISS values from the food ingredient repository. In block 322, the processor may retrieve the matching food ingredients and their associated EISS values from the food ingredient repository. In an embodiment, the processor may be configured to determine whether the requester specified that only certain sources of food ingredient details within the food ingredient repository are to be retrieved (e.g., the requester may use a drop-down list, or tick boxes, that are part of a graphical user interface in order to select only food ingredient details that were originally sourced from a specific certified national database).

In determination block 324, the processor may determine whether all of the matching food ingredients have been processed. In response to determining that all of the matching food ingredients have not been processed (i.e., determination block 324 = "No"), the processor may select the next unprocessed food ingredient in block 326. In block 328, the processor may determine the match level for the food ingredient using one or more match rules.

In response to determining that all of the matching food ingredients have been processed (i.e., determination block 324 = "Yes"), the processor may select the food ingredient with the best match level in block 330. In determination block 332, the processor may determine whether the requester wants to select a food ingredient with a lower match level. In response to determining that the requester wants to select a food ingredient with a lower match level (i.e., determination block 332 = "Yes"), the processor may allow the requester to select a food ingredient with the lower match level in block 334.

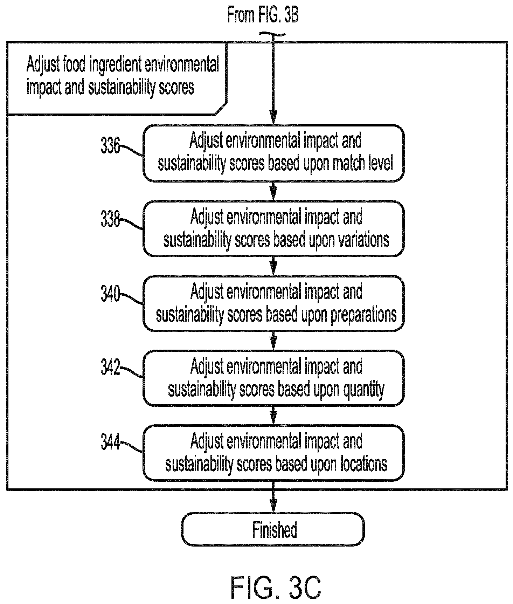

With reference to FIG. 3C, after block 334 or in response to determining that the requester does not want to select the food ingredient with a lower match level (i.e., determination block 332 = "No"), the processor may adjust the food ingredient EISS values in blocks 336-344. For example, the processor may adjust EISS values based on match level in block 336, adjust EISS values based on variations in block 338, adjust EISS values based on preparations in block 340, adjust EISS values based on quantity in block 342, and/or adjust EISS values based on locations in block 344.

As mentioned above, in block 328, the processor may determine the match level for the food ingredient using one or more match rules. A match rule may be a data or information structure organized to match or link food ingredient details from an input (e.g., a barcode, description, etc.) to a database of known food ingredients. The match level may be a ranking or score for determining how closely the food ingredient from the food ingredient repository (e.g., obtained in block 322) matches the food ingredient that was extracted from the food ingredient description (e.g., in block 304). The match level may be determined by evaluating one or more match rules, such that each match rule that is deemed to be true increases the match level of the food ingredient from the food ingredient repository.

In an embodiment, each match rule may contribute a different amount to the match level (i.e., the match rules may be cumulative and weighted). The match rules may be evaluated in descending order of contribution, and the process may finish if a match rule is deemed to be true. For example, if the food ingredient details that were extracted from the food ingredient description contained a barcode with a unique identifier for the food ingredient, and the food ingredient from the food ingredient repository contains this same unique identifier, then the processor may assign the highest value to the match level and the process may finish. A match rule may be evaluated multiple times (e.g., once for each variation, once for each preparation), and therefore it may make multiple contributions to the match level. Such a match rule may have a maximum limit on the number of times that it may be executed, or a limit on the maximum contributions that it can make to the match level. Match rules may be dependent on other match rules (e.g., a subtype match may not be permitted if there was no type match). Further, a match rule may contribute negatively to the match level.

In an embodiment, the source of the information relating to the food ingredient in the food ingredient repository may contribute to the match level (e.g., if the food ingredient information is less than two years old it may contribute to a higher match level than food ingredient information that is more than five years old, a reputable independent source of food ingredient information may contribute to a higher match level than food ingredient information from a food ingredient manufacturer).

Evaluating two or more match rules enables food ingredients that cause a first match rule to be true to be differentiated from each other. For example, "Irish full-fat milk" and "English full-fat milk" would both equally be true for match rules relating to the food ingredient type (i.e., "milk") and sub-type (i.e., "full-fat"), but only "Irish full-fat milk" would be true for a match rule relating to the food ingredient origin location being "Ireland".

Returning to FIG. 3B, in block 330, the food ingredient from the food ingredient repository with the highest match level is selected as the food ingredient that was extracted from the food ingredient description, even though it may not be an exact match. For example, if the food ingredient that was extracted from the food ingredient description was "Irish low-fat milk", and the only matching food ingredients from the food ingredient repository were "Irish full-fat milk" and "English low-fat milk", then the match level would enable "Irish full-fat milk" to be selected ahead of "English low-fat milk". As another example, if the food ingredient that was extracted from the food ingredient description was "Irish limes", and the only matching food ingredients from the food ingredient repository were "Irish citrus fruit" and "Global limes", then the match level would enable "Global limes" to be selected ahead of "Irish citrus fruit".

In block 332 the processor may determine whether the requester wants to select a food ingredient with a lower match level. This may be determined based on the requester's profile configuration, or by enabling the requester to interact with a graphical user interface (GUI). If the requester wants to select a food ingredient with a lower match level, then the requester may be presented with the complete list of food ingredients (e.g., obtained in block 322) in block 334. The requester can then select an alternative food ingredient. A requester may want to select a food ingredient with a lower match level if the requester has additional domain or localised knowledge that is not captured in the food ingredient repository, and which enables the requester to know that the alternatively selected food ingredient is a better match.

In blocks 336-344, the processor may adjust the EISS values that were retrieved from the food ingredient repository (i.e., as part of blocks 322-334) for the selected food ingredient. The adjustment may be applied to the overall EISS value for the food ingredient, or it may be applied to only some of the environmental impact and sustainability factors for the food ingredient. In an embodiment, the adjustments may be stored in the food ingredient repository, and they may be associated with the appropriate food ingredients. Thus, the adjustments to the food ingredient that has a preparation of "roasted" may vary between nuts and pork.

In block 336, the EISS values for the selected food ingredient are adjusted based on the match level. In an embodiment, the EISS values may not be adjusted if the match level was above a threshold, but they may be adjusted negatively if the match level was below a threshold to allow for an error of margin due to the food ingredient not being an exact match.

In block 338, the EISS values for the selected food ingredient are adjusted based on variations (e.g., obtained in block 310). For example, the "organic" variant of a food ingredient may have a better EISS value than the regular variant.

In block 340, the EISS values for the selected food ingredient are adjusted based on preparations (e.g., obtained in block 312). Food ingredients that have more preparations (e.g., roasted, boiled, cooked, peeled) may generally have a worse EISS value than food ingredients that have had less preparations. Similarly, food ingredients that must be refrigerated or frozen may generally have a worse EISS value than food ingredients that are stored at room temperature and transported in the same way.

In block 342, the EISS values for the selected food ingredient are adjusted based on its quantity (e.g., obtained in block 314). In an embodiment, the EISS values may be adjusted based on the amount of packaging required. The relationship between the food ingredient quantity and the packaging may not be a linear relationship (e.g., less packaging may be required for a single five liter carton of milk than for four one liter cartons of milk).

In block 344, the EISS values for the selected food ingredient are adjusted based on its origin location and the location of the requester (e.g., obtained in blocks 316-320). Food ingredients that are transported further may generally have a worse EISS value than food ingredients that are transported less. The EISS values may be further adjusted based on the type of transport used to bring the food item from the origin location (e.g., a food ingredient transported using an electric van may have a better EISS value than a food ingredient transported using a diesel truck) and the conditions of transport (e.g., if the food ingredient must be transported in a frozen state then this may cause a worse EISS value). Further, the preparation and processing techniques can vary between origin locations.

In an embodiment, the origin location for the food ingredient may be updated or replaced using a value from the food ingredient repository (e.g., if it was not possible to obtain an origin location in blocks 316-320). In an enhanced embodiment, the food ingredient repository may contain multiple locations for a food ingredient, and each of these locations may be associated with a different time in the year (e.g., the origin location of strawberries may be Ireland in May to August, and Spain in September to the following April).

In an embodiment, some of the blocks 336-344 may need to be considered together. For example, a fresh food ingredient may have an overall worse EISS value than equivalent frozen food ingredient if the fresh food ingredient must be transported by air in order to preserve its freshness in comparison to the frozen food ingredient being transported by sea (with reference to blocks 340 and 344). As another example, a food ingredient may generally have an overall better EISS value if it is gown or produced in a location that is its natural habitat irrespective of the impact of the associated preparations and transport (with reference to blocks 340 and 344).

In an embodiment, the requester may provide the values that are used in blocks 336-344. These values may be compared against the food ingredient repository (or an external global database) to ensure that they are within acceptable limits or ranges. If the values are outside of the acceptable limits, then the requester may be required to provide documentary evidence that the provided values are legitimate (e.g., a Life Cycle Assessment (LCA) conducted by an independent or certified third party). In an embodiment, a requester may be able to provide values only for food ingredients that it manufacturers or that it has added to the food ingredient repository.

In an embodiment, default values may be used in blocks 336-344 if the requester does not provide any values (e.g., a default national average transport cost per kilogram kilometer may be used as part of block 344).

After block 344, the processor may generate the EISS value for the food ingredient.

Some embodiments may include methods of analyzing food ingredient details that include receiving, by a processor, a description of a food ingredient (the description including at least one of a text, an image, and a barcode), extracting the details of the food ingredient from the food ingredient description, analyzing the extracted food ingredient details, and generating a food ingredient information structure that represents the food ingredient and identifies the food ingredient type, subtype, variations, preparations, quantity, and location. In some embodiments, the methods may further include retrieving matching food ingredients and their associated EISS values from a food ingredient repository, iterating through each of the unprocessed food ingredients to determine a match level for each unprocessed food ingredient using one or more match rules (each match rule increasing the match level of the selected food ingredient from the repository based on how closely it matches the extracted details of the food ingredient), selecting the food ingredient with the highest match level after all matching food ingredients have been processed, and adjusting the EISS values of the selected food ingredient based on the match level, variations, preparations, quantity, and/or locations of the selected food ingredient.

In some embodiments, receiving the description of the food ingredient may include receiving unstructured data that contains details of a food type, subtype, variations of the food type, preparation or state details relating to the food ingredient, and a quantity of the food ingredient. In some embodiments, receiving the description of the food ingredient may include receiving text input by a requester, an image captured using a mobile device, or a Universal Product Code (UPC) barcode.

In some embodiments, extracting the details of the food ingredient from the food ingredient description may include performing image-based text analysis, machine learning (e.g., identifying food ingredients, determining variations of the food ingredient, etc.), and/or barcode extraction operations.

In some embodiments, analyzing the extracted food ingredient details may include parsing the extracted food ingredient details and segmenting them into separate words or word-groups, determining the food ingredient type and subtype, preprocessing the food ingredient details to normalize the data, remove special characters, convert the text to lowercase, discarding words that are deemed insignificant during the analysis of the extracted food ingredient details, and/or performing other similar operations to streamline the text analysis operations. In some embodiments, analyzing the extracted food ingredient details may further include using natural language processing (NLP) techniques to parse the pre-processed text, using machine learning algorithms to predict the food type and subtype for tokens or parsed data that are not clear and/or for terms that are not in the dictionary, determining the food ingredient variations and standardizing the identified variations to maintain consistency, determining the food ingredient preparations, determining food ingredient quantity, and/or determining whether the extracted food ingredient details include an origin location. In some embodiments, determining the food ingredient quantity may include determining food ingredient quantity based on information included in the extracted food ingredient details, information derived from an alternative measurement, or information generated from a machine learning model. In some embodiments, determining the food ingredient quantity may include using image-based text analysis on the food ingredient packaging. In some embodiments, using machine learning techniques may include using deep learning models trained for image classification. Some embodiments may include homogenizing the food ingredient variations and preparations as part of the analysis operations.

In some embodiments, determining the match level for each unprocessed food ingredient may include evaluating each match rule in descending order of contribution, and terminating the evaluation in response to determining that a match rule is true. Some embodiments may include pre-processing the extracted details of the food ingredient to normalize the data, remove special characters, convert the text to lowercase, or perform other similar operations to streamline text analysis operations before determining the match level. In some embodiments, iterating through each of the unprocessed food ingredients to determine a match level for each unprocessed food ingredient using one or more match rules may include evaluating the match rules multiple times. In some embodiments, the match rules may include a value identifying a maximum limit on the number of times that they may be executed or a limit on the maximum contributions they may make to the match level. In some embodiments, the processor may retrieve the matching food ingredients and their associated EISS values from the food ingredient repository based on requester-specified sources of food ingredient details.

In some embodiments, adjusting the EISS values of the selected food ingredient based on the match level, variations, preparations, quantity, and locations of the selected food ingredient may include adjusting the EISS values based on the age or source of the information relating to the food ingredient in the food ingredient repository.

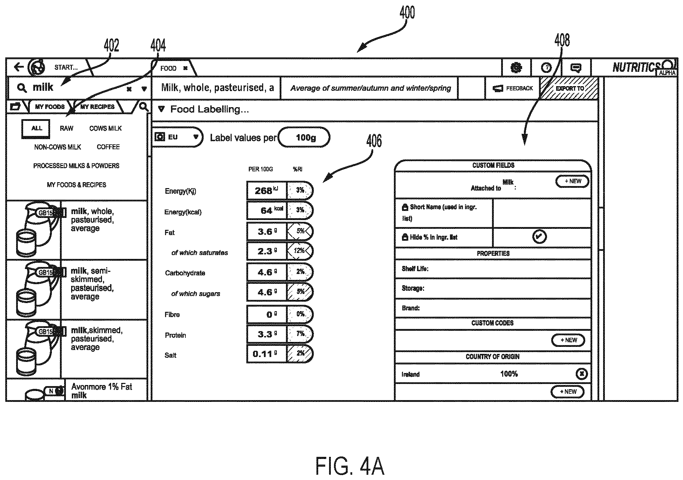

FIGs. 4A-4C illustrate examples of graphical user interfaces 400, 430, 460 for calculating the EISS value of a food ingredient using a food ingredient repository according to the various embodiments. In particular, FIG. 4A illustrates a graphical user interface 400 that includes information about a food ingredient in a food ingredient repository. The food ingredient type is "milk" 402, and various subtypes (e.g., "Raw", "Cows' Milk") are illustrated 404. The food ingredient repository contains nutritional information 406 and custom fields relating to its shelf life 408.

In some embodiments, the processor may be configured to initialize a graphical user interface 400 component, object or information structure for the analysis of the food ingredient's EISS value. The processor may add/display food ingredient information to the graphical user interface, add/display nutritional information to the graphical user interface, add/display shelf life information to the graphical user interface, and render the graphical user interface on an electronic display. The processor may receive user inputs that select a food ingredient type and subtypes, determine or compute the EISS value, add/display the EISS value on the graphical user interface, and render the updated graphical user interface on the electronic display.

In some embodiments, displaying the food ingredient information may include retrieving the selected food ingredient data from the food ingredient repository, adding/displaying the food ingredient type on the graphical user interface (e.g., "milk" 402), adding/displaying the subtypes related to the food ingredient type (e.g., "Raw", "Cows' Milk" 404) on the graphical user interface, and adding/displaying the graphical user interface on an electronic display of a computing device. In some embodiments, adding/displaying the nutritional information may include retrieving the nutritional information of the selected food ingredient from the repository. In some embodiments, displaying the shelf life information may include retrieving and displaying custom fields related to the shelf life of the selected food ingredient.

In some embodiments, selecting the food ingredient type and subtypes may include adding/displaying components that allow users to select the specific food ingredient type and its subtype for analysis, receiving user input, determining the EISS value, and adding/displaying the EISS value to the graphical user interface, and displaying the graphical user interface on the electronic display. In some embodiments, determining the EISS value may include receiving user input selecting a food ingredient type and its subtype, communicating with the back-end server system to calculate the EISS value using the information from the food ingredient repository, and displaying the calculated EISS value on the graphical user interface.

It should be understood that the processor may be configured to perform the same or similar operations to generate, render, and update the graphical user interfaces 430, 460, 600, 630, 660, 680, 700, 730, and 760 discussed further below.

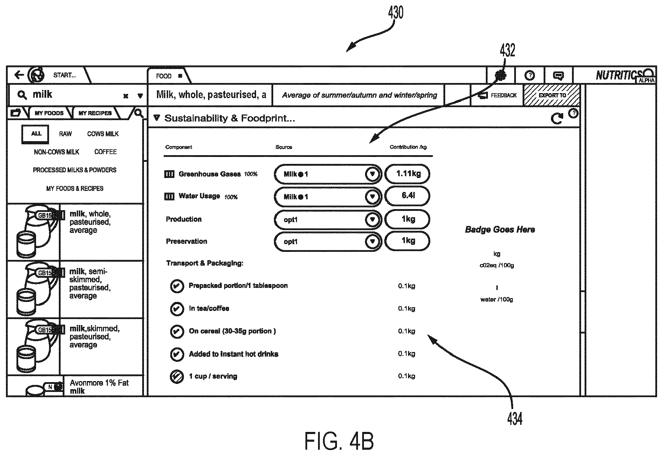

FIG. 4B illustrates a graphical user interface 430 that includes EISS value information about a food ingredient in a food ingredient repository. The EISS value may include multiple environmental impact and sustainability factors 432 (e.g., Greenhouse Gases", "Water Usage") and adjustments for quantities and locations 434 (e.g., "Prepackaged portion", "In tea/coffee").

In some embodiments, the processor may be configured to initialize the graphical user interface component, object or information structure for displaying a food ingredient's EISS value. The processor may retrieve EISS value information from the food ingredient repository, add/display the multiple environmental impact and sustainability factors on the graphical user interface (e.g., "greenhouse gases", "water usage", etc.), add/display any adjustments that have been made based on quantities and locations (e.g., "prepackaged portion", "in tea/coffee") on the graphical user interface, allow users to select specific environmental impact factors and sustainability factors for a more detailed view, allow users to adjust the quantity and location factors to see how they affect the overall EISS value, and calculate and display adjusted EISS value on the graphical user interface. In some embodiments, the processor may recalculate the adjusted EISS value in real-time in response to user interaction adjusting quantity or location factors.

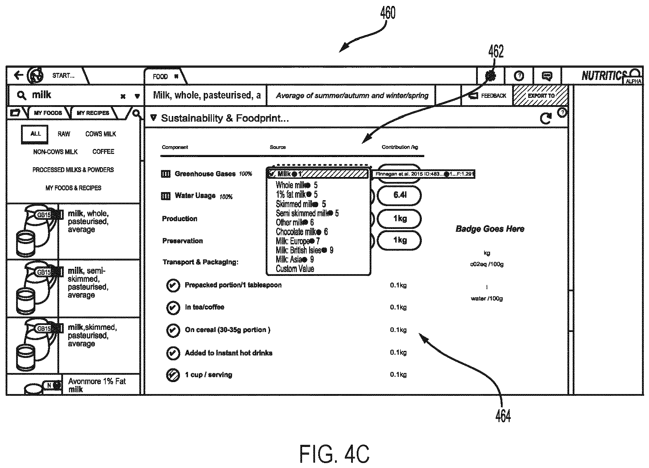

FIG. 4C illustrates a graphical user interface 460 that enables a requester to add a food ingredient to the food ingredient repository. The requester may use a similar food ingredient from the food ingredient repository (e.g., by selecting it from drop-down list 462) as a starting point, and then the requester may customise it (e.g., using options 464).

In some embodiments, the processor may be configured to initialize the graphical user interface component, object or information structure for allowing a requester to add a new food ingredient to the food ingredient repository. The processor may retrieve and display a list of existing food ingredients from the food ingredient repository, generate a dropdown list based on the retrieved list of existing food ingredients, allow the requester to select a similar food ingredient from the dropdown list as a starting point for adding a new food ingredient, display various customization options (e.g., additional details such as type, subtype, variations, preparations, quantity, etc.) to the requester in response to determining that a similar food ingredient has been selected, receive user customizations inputs based on the displayed customization options, collect the inputs and create a new food ingredient entry, add a new customized food ingredient to repository, update the graphical user interface (including the dropdown list) to include the newly added food ingredient, confirm the successful addition of the new food ingredient to the repository (e.g., by providing feedback to the user on the graphical user interface, etc.).

In an alternative embodiment, any or all interactions with method 300 (with reference to FIGs. 3A-3C) for calculating the EISS value of a food ingredient using a food ingredient repository may be performed using application programming interfaces (APIs).

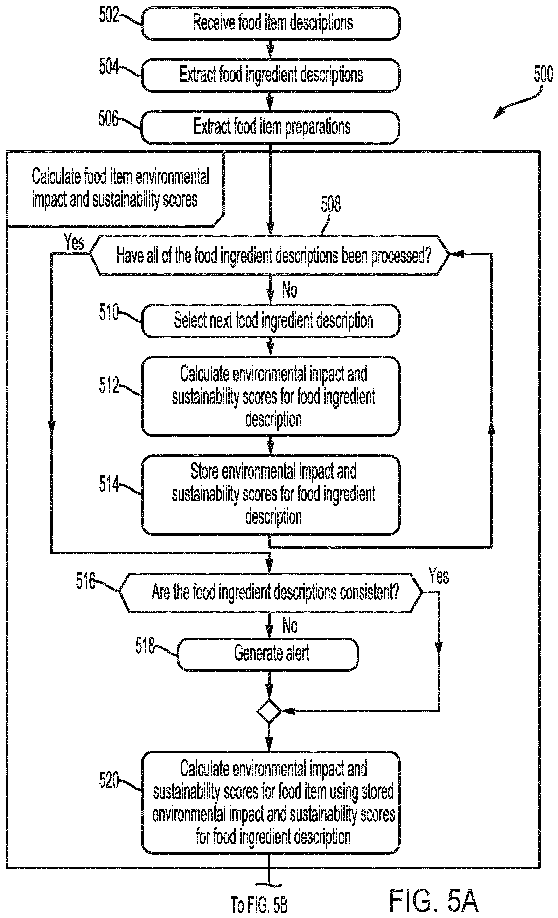

FIGs. 5A-5D are process flow diagrams illustrating a method 500 of calculating the EISS values of a food item using a food ingredient repository and generating and using EISSDC and/or EISS labels in accordance with some embodiments. Method 500 may be performed in a computing device (e.g., EIS server 1204, etc.) by any or all of the processing units (e.g., processor 1252, 1310, 1312, 1314, 1316, 1318, 1321, 1322, 1321, 1322, etc.) computing subsystems, or components (e.g., components 1270-1296, etc.) discussed in this application. Means for performing the functions of method 500 may include any or all of the processing units (e.g., processor 1252, 1310, 1312, 1314, 1316, 1318, 1321, 1322, 1321, 1322, etc.), computing subsystems, or components (e.g., components 1270-1296, etc.) discussed in this application.

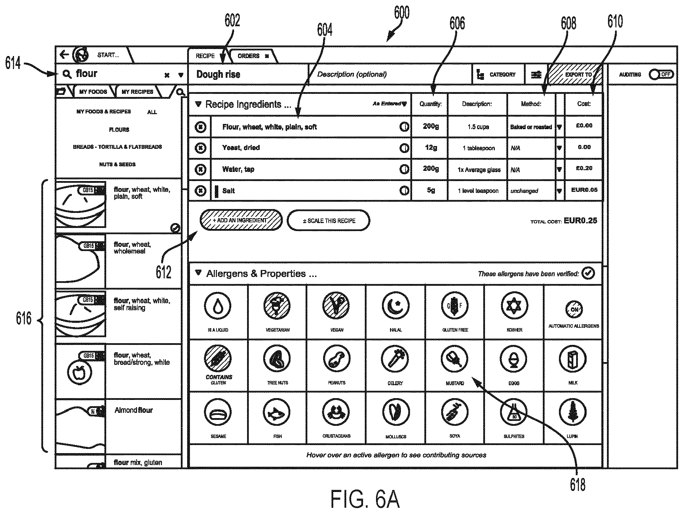

In block 502, the processor may receive a description of the food item. This may be unstructured data that contains details of the food item including its food ingredients, preparation instructions, packaging details, logistical details, and destination location details. The food item description may be text that was input by the requester using a graphical user interface, a set of food ingredients that was selected by the requester using a graphical user interface (e.g., as illustrated in FIG. 6A), or an image (e.g., a photo of a recipe captured using a mobile phone). In an alternative embodiment, the description of the food item (including text and/or images containing its food ingredients, preparation instructions, packaging details, logistical details, and destination location details) may be provided using an application programming interface (API).

In block 504, the processor may extract the details of the food ingredient descriptions from the food item description. For example, if the food item description was an image that includes text (e.g., a photo of a recipe), then the food ingredient descriptions may be extracted from the text (e.g., using image-based text analysis). In block 506, the processor may extract the food item preparations from the food item description. The food item preparations may include instructions detailing how the food ingredients are combined to form the food item (e.g., mixing, blending, grating, cooking, freezing, etc.).

In blocks 508-520 the processor may calculate the EISS values for the food item. In determination block 508, the processor may determine whether all of the food ingredient descriptions have been processed. In response to determining that all of the food ingredient descriptions have not been processed (i.e., determination block 508 = "No"), the processor may select the next food ingredient description in block 510. In block 512, the processor may calculate the EISS values for the food ingredient. This may be calculated using the blocks previously described with reference to FIGs. 3A-3C.

In block 514, the processor may store the food ingredient and its associated EISS values in memory. In an embodiment, these details may be stored as part of the requester's profile.

In some circumstances it may not be possible to calculate an EISS value for each food ingredient. In these circumstances the method may exit or terminate. The processor may identify the food ingredient or food ingredients for which no EISS values could be found. In an embodiment, the processor may determine whether the requester specified that certain food ingredients are excluded from this requirement (e.g., salt, herbs, and spices may be excluded due to the small quantities that are typically used).

In an enhanced embodiment, the processor may determine whether the requester set a percentage threshold for the minimum amount of food ingredients for which an EISS value should be calculated. The threshold may be based on the number of food ingredients (e.g., at least 90% of the food ingredients forming the food item) or the mass/volume of the food ingredients (e.g., food ingredients representing at least 95% of the mass/volume of the food item).

In response to determining that all of the food ingredient descriptions have been processed (i.e., determination block 508 = "Yes"), the processor may analyze the food ingredient descriptions to determine whether they are consistent in block 516. The consistency may be based on the food ingredients' variations (e.g., "low-fat" does not make sense in relation to water), preparations (e.g., if there are three vegetables, and two are raw and one is cooked), quantities (e.g., mixtures of metric and imperial units of mass), and locations (e.g., a food ingredient description contains "Spanish olives", but the requester has specified the origin location as Italy). If the food ingredient descriptions are determined to be inconsistent, the processor may generate an alert (e.g., displayed in the graphical user interface, written to a log) in block 518. In this circumstance the method may exit or terminate.

In block 520, the processor may calculate the EISS values for the food item using the stored (i.e., in block 514) EISS values for the food ingredient descriptions. This calculation may be performed for each of the environmental impact and sustainability factors by aggregating and normalizing them across all of the food ingredients.

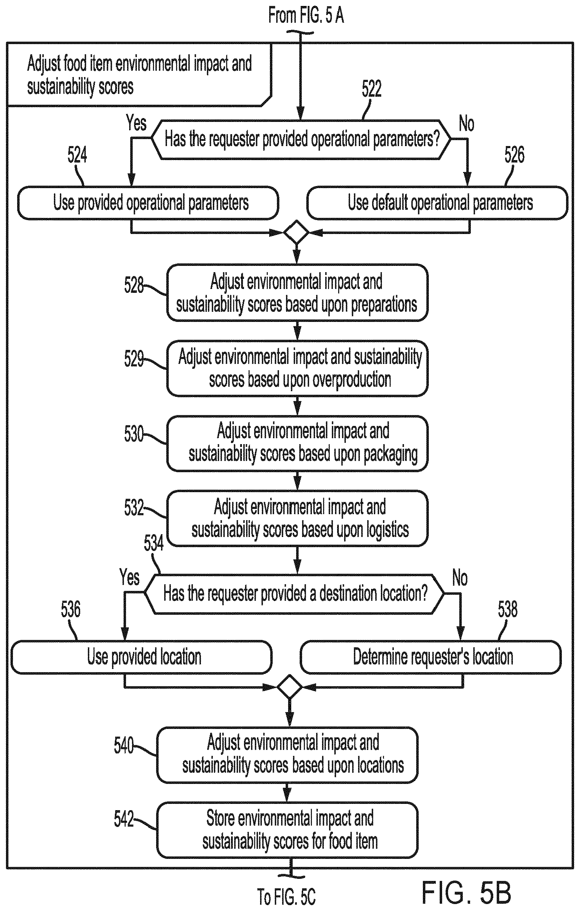

With reference to FIG. 5B, in blocks 522-542, the processor may adjust the EISS values for the food item. In determination block 522, the processor may determine whether the requester has provided any operational parameters that should be applied. For example, the EISS values for the food ingredients and the food item may need to be calculated in different ways according to different standards (e.g., US or EU standards). The requester's operational parameters may be retrieved from the requester's profile. In response to determining that the requester has provided operational parameters (i.e., determination block 522 = "Yes"), the processor may use the provided operational parameters in block 524. In response to determining that the requester has not provided operational parameters (i.e., determination block 522 = "No"), the processor may use the default operational parameters in block 526.

In block 528, the processor may adjust the EISS values for the food item based on the preparations. For example, 100 grams of dried rice may become approximately 284 grams of cooked rice due to it absorbing water during the cooking process. Therefore, some of the EISS values may need to be increased due to the increased mass of the cooked rice (e.g., the water consumption and the energy consumption may need to be increased, whereas there may be no change to the amount of packaging). Alternatively, if the food item required 100 grams of cooked rice, then some of the EISS values for dried rice would be decreased because less energy is required to produce 100 grams of cooked rice compared to cooking 100 grams of dried rice.

In block 529, the processor may adjust the EISS values for the food item based on the quantity (e.g., mass, volume) of overproduction of the food item and the end-of-life handling associated with overproduction of the food item. The overproduction and end-of-life handling may be broken down into multiple categories (e.g., accidental or spoilage, production waste including trimmings and residuals from preparation, overproduction (i.e., unsold), and consumer waste (i.e., sold, but not consumed)), and each category may be associated with a destination for food items in that category (e.g., charity program to feed homeless people, landfill, composting, biofuel generation). Each category may be weighted differently so that it has a different impact upon the EISS values.

In block 530, the processor may adjust the EISS values for the food item based on the packaging. The requester may be able to provide details relating to the packaging using a graphical user interface, or these details may be obtained from a profile. In an embodiment, the processor may improve the EISS values for the food item by minimizing the quantity of packaging materials and using recycled packaging materials.

In block 532, the processor may adjust the EISS values for the food item based on the logistics associated with the food item. The requester may be able to provide details relating to the logistics using a graphical user interface, or these details may be obtained from a profile. The logistics may relate to how the food item may be stored when it is created, and for how long it may be stored (e.g., it may need to be refrigerated, and it may be stored for one week before being dispatched or consumed). The requester may also be able to provide details relating to its energy costs and sources (e.g., energy obtained from renewable sources may positively impact the EISS values for the food item).

In determination block 534, the processor may determine whether the requester has provided a destination location (i.e., the location where the food item may be sent). If the requester has provided a destination location (i.e., determination block 534 = "Yes"), the processor may use this location in block 536. If the requester has not provided a destination location (i.e., determination block 534 = "No"), the processor may use the requester's location as the destination location in block 538. The requester's location may be obtained from a profile associated with the requester, by performing a geo-lookup using the requester's IP address, by querying the requester's computing device, etc. In block 540, the processor may adjust the EISS values for the food item based on the destination location. Food items that are transported further may generally have a worse EISS value than food items that are transported less. The EISS values for the food item may be further adjusted based on the type of transport used to bring the food item to the destination location (e.g., a food item transported using an electric van may have a better EISS value than a food item transported using a diesel truck) and the conditions of transport (e.g., if the food item must be transported in a frozen state then this may cause a worse EISS value).

In an enhanced embodiment, the processor may be configured to determine whether the requester provided multiple destination locations and associated types of transport used to bring the food item to the destination locations for multi-hop distributions (e.g., a food item may be transported from a centralized kitchen to a local distribution point using a petrol van, and the food item may then be distributed from the local distribution point to a home using an electric scooter or drone).

In block 542, the processor may store the adjusted EISS values for the food item in memory (e.g., as part of the requester's profile).

In an enhanced embodiment, the processor may calculate quality metrics for the adjusted EISS values for the food item. The quality metric may indicate the quality and completeness of the adjusted EISS values, and it may be based on a weighted combination of the match levels for the food ingredients and their contribution to the food item (e.g., based on mass/volume). The quality metric may also be based on the quality of the inputs provided to the method (e.g., the quality metrics would be better if the requester provided source and destination locations rather than using default values). In an embodiment, the processor may terminate the method or exit if a quality metric is below a threshold.

The various embodiments may provide the requester with a breakdown of how the quality metric is calculated (e.g., using a graphical user interface, as part of a report) so that the requester can identify areas where they can add more, or better quality, inputs to the method.

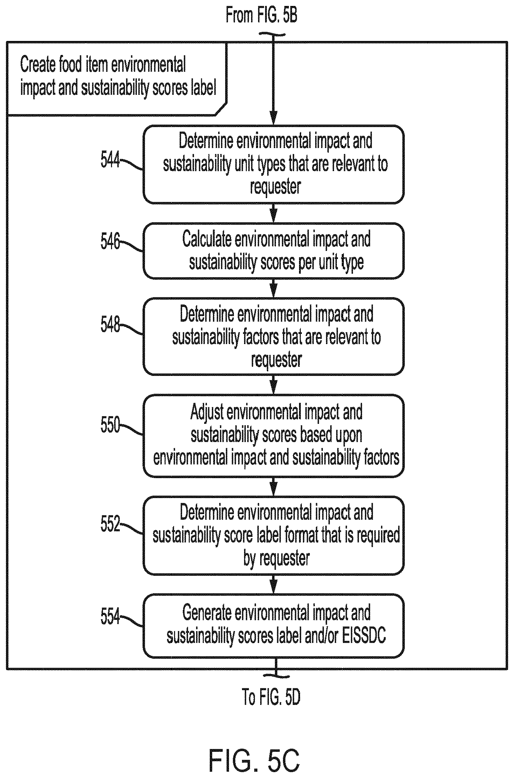

With reference to FIG. 5C, in blocks 544-554, the processor may create an EISS digital certificate (e.g., as illustrated in FIGs. 2A-2C) and/or food item EISS label(s) (e.g., as illustrated in FIG. 1A-1F). In block 544, the processor may determine the environmental impact and sustainability unit types that are relevant to the requester. The requester may be able to provide details relating to the unit types using a graphical user interface, or these details may be obtained from a profile. In an embodiment, the unit types may be units of mass, volume, typical/expected adult serving/portion, or energy (e.g., joule). In block 546, the processor may calculate the EISS values for the food item based on the unit types that were determined to be relevant to the requester (e.g., as part of block 544). For example, if the adjusted EISS values for the food item (e.g., as stored in block 542) were based on 100 grams of the food item, but the requester wants to use a unit type of a portion that corresponds to 50 grams, then the processor may divide the adjusted EISS values for the food item by two.

In block 548, the processor may determine the environmental impact and sustainability factors that are relevant to the requester. The requester may be able to provide details relating to the factors using a graphical user interface, or these factors may be obtained from a profile. For example, the requester may be interested in greenhouse gas emissions and water consumption, but not interested in energy consumption, packaging, plastic content, and toxins. In block 550, the processor may adjust the EISS values for the food item based on the factors that were determined to be relevant to the requester (e.g., as part of block 548). For example, if the requester is only interested in the greenhouse gas emissions and water consumption environmental impact and sustainability factors, then the overall EISS value for the food item may be calculated using only these two environmental impact and sustainability factors (e.g., as a weighted combination of them).

In block 552, the processor may determine the EISS label format or formats that are required by the requester (e.g., as illustrated in FIGs. 1A-1F). The requester may be able to provide details relating to the required label formats using a graphical user interface, or these label formats may be obtained from a profile. In block 554, the processor may generate the EISS labels for the food item based on the label formats that were determined to be required by the requester (e.g., as part of block 552). For example, if the requester requires a label format that represents the EISS values for the food item using an alphabetic and color scale (e.g., as illustrated in FIG. 1A) then the EISS values for the food item (e.g., as a result of the adjustment performed in block 550) may be mapped to the alphabetic and color scales.

In an embodiment, the processor may determine that the requester would like to include an external accreditation mark (e.g., text, icon, logo) as part of the EISS label (e.g., as part of block 552). The external accreditation mark may be issued by an external party (e.g., a government body, an NGO), and it may be used to indicate that the food manufacturer is accredited by the external party. The external accreditation mark may relate to any environmental impact and sustainability factors or initiatives (e.g., deforestation programs, the use of sustainable palm oil, animal welfare, land use, eutrophication, and social equity). Alternatively, the food manufacturer may only be permitted to use the external accreditation mark if the EISS values associated with the food item are within a certain range. The external accreditation mark may subsequently be included as part of the EISS label and/or EISSDC (e.g., as part of block 554). In some embodiments, the processor may generate the EISSDC using the data from blocks 542 and 554.

In an embodiment, default values may be used in blocks 544, 548, and 552 if the requester does not provide any values.

In an embodiment, the processor may use the costing and quantity information associated with each food ingredient, and the environmental impact and sustainability factors relating to the requester's energy consumption, in order to calculate the total cost of the food item (e.g., as part of block 542). In an enhanced embodiment, the processor may determine whether the requester provided a suggested profit margin and taxation information so that a recommended retail price (RRP) may be calculated for the food item. In some jurisdictions, the amount of tax charged on a food item may relate to the EISS values for the food item.

In an embodiment, in blocks 544-554, the processor may create a report rather than creating one or more food item EISS labels. The report may relate to greenhouse gas emissions, and it may be required in order to comply with regulatory standards or legislative requirements. In an enhanced embodiment, the report may be automatically sent to a third party (e.g., emailed to a reseller of the food item, or uploaded to a website associated with a regulator).

In an embodiment, the EISS labels and/or the report may include (either directly or indirectly via links) user-friendly interpretations of the EISS values (e.g., explanations of carbon dioxide emissions, water consumption, energy consumption). These interpretations may also include equivalency examples (e.g., the time spent in a shower may be used as an equivalency example for water consumption, and the distance traveled by an average car may be used for carbon dioxide equivalency examples).

In an embodiment, the processor may be configured to present the requester with EISS values for other food items as part of the EISS labels and/or report. These other food items may be similar food items, food items created by the requester, food items recently viewed by the requester, or food items favored or bookmarked by the requester.

In an alternative embodiment, the processor may continuously or repeatedly calculate the EISS values of a food item as food ingredients are added, modified, and removed from it.

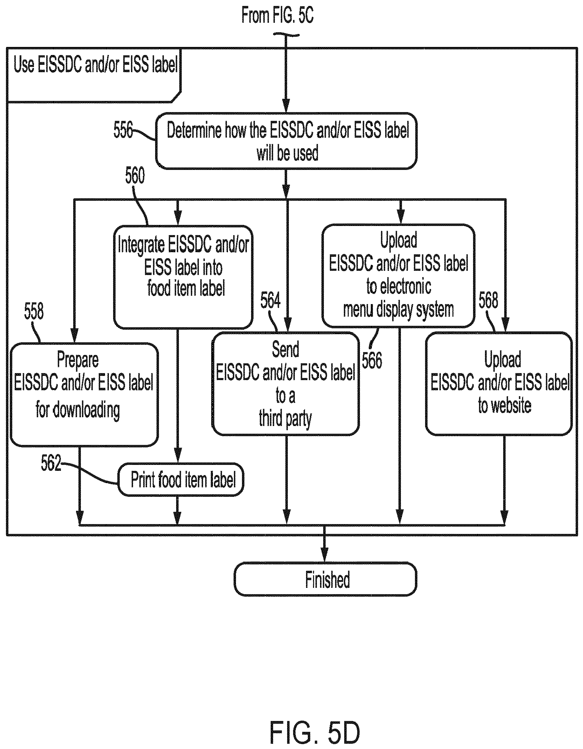

With reference to FIG. 5D, in blocks 556-568, the processor may use the food item EISSDC and/or EISS label(s). In block 556, the processor may determine how the requester wants to use the food item's EISSDC and/or EISS label(s) (e.g., based on the requester's profile).

In block 558, the processor may publish or otherwise make available the EISSDC and/or EISS label(s) to the requester for downloading and saving (e.g., the requester may be provided with a "Click here to download" link in the graphical user interface (GUI), the requester may select to receive the EISSDC and/or EISS label(s) by email).

In block 560, the processor may integrate EISS label(s) into larger, and more complete, food item labels (e.g., an existing label that includes nutritional information for the food item, a menu). In block 562, the EISS label(s) may be sent to a printer (either a physical printer or a printing company) for printing.

In block 564, the processor may send (e.g., by activating communication circuitry, etc.) the EISSDC and/or EISS label(s) electronically to a third party (e.g., by email, HTTP upload, FTP). This may be useful in scenarios where the food item manufacturer wants to (or must) provide EISSDC and/or EISS label(s) to the resellers of its food items.

In block 566, the processor may upload the EISSDC and/or EISS label(s) to an electronic menu display system. The electronic menu display system may subsequently cause the EISS label(s) to be displayed as part of a menu on an in-premises electronic display.

In block 568, the processor may upload the EISSDC and/or EISS label(s) to a website or other similar web server. The website or web server may subsequently cause the EISS label(s) to be displayed as part of an electronic listing (e.g., menu, food item information webpage) on a website or within an application on a smartphone. The website or web server may be associated with a third party (e.g., the website or web server may be associated with a food retail company to which the requester is a supplier).

It should be understood that in some embodiments, blocks 558-568 may be optional, and they may occur sequentially or in parallel. It should also be understood that blocks 558-568 may contain additional blocks for using the food item EISSDC and/or EISS label(s) for different purposes.

In an embodiment, the processor may associate the EISSDC and/or EISS label(s) with one or more instances of the food item (e.g., specific manufacturing batch numbers). This may enable blocks 558-568 to occur only for the appropriate food items.

Some embodiments may include methods of determining the EISS value of a food item and generating and using a EISSDC and/or EISS labels. In some embodiments, the methods may include receiving, by a processor, a food item description (e.g., unstructured data that includes details of the food item, its ingredients, preparation instructions, packaging details, logistical details, destination location details, etc.), extracting food ingredient details from the received food item description, extracting food item preparations (including how the food ingredients are combined to form the food item from the food item description), determining unprocessed food ingredient descriptions or whether all the food ingredient descriptions have been processed, iterating through each of the unprocessed food ingredients and calculating EISS values for each ingredient, storing the food ingredient and its associated EISS values in memory and/or as part of the requester's profile, determining potential calculation constraints, analyzing ingredient descriptions for consistency (e.g., based on variations, preparations, quantities, and locations), generating alerts for inconsistencies identified in the food ingredient descriptions, and calculating total EISS values. In some embodiments, determining potential calculation constraints may include identifying food ingredients for which EISS values could not be calculated, excluding certain ingredients specified by the requester or based on the quantity used, and/or determining a threshold for a minimum amount of food ingredients for which an EISS value should be calculated. In some embodiments, calculating total EISS values may include calculating the overall EISS values for each food item using the stored scores for the ingredient descriptions, and aggregating and normalizing the scores across all food ingredients to generate the final total EISS values.

Some embodiments may include methods of adjusting EISS values for a food item. In some embodiments, the methods may include determining, by a processor, one or more operational parameters for score calculation (e.g., from the requester, default parameters, etc.), adjusting the EISS values considering the preparation methods of the food item, adjusting the EISS values based on the quantity of overproduction of the food item and end-of-life handling associated with overproduction, adjusting the EISS values based on various categories (e.g., accidental/spoilage, production waste, overproduction (unsold), consumer waste (sold but not consumed), etc.), adjusting the EISS values based on the packaging details provided by the requester or obtained from the profile, adjusting the EISS values based on logistics related to the food item (e.g., how it is stored, for how long, energy costs, sources, etc.), determining a destination location, adjusting the EISS values based on the determined destination location, adjusting the EISS values based on the distance of transportation and the conditions and type of transport used for delivering the food item, adjusting the EISS values based on multi-hop distributions (e.g., multiple destination locations, different types of transports used, etc.), storing the adjusted EISS values in memory, computing or determining a quality metric that indicates the quality and completeness of the adjusted scores based on various parameters (e.g., match levels for food ingredients, quality of inputs, etc.), determining whether the determined quality metric is below a threshold value, exiting or terminating further processing or adjustments in response to determining that the quality metric is below the threshold value, and displaying the quality metric, details of how the quality metric is calculated, areas for improvement, etc. on an electronic display.

Some embodiments may include methods of generating EISS labels for a food item. In some embodiments, the methods may include determining, by a processor, relevant unit types for the requester (e.g., mass, volume, portion size, energy), determining EISS values based on the relevant unit types, determining relevant environmental impact and sustainability factors for the requester (e.g., greenhouse gas emissions, water consumption), adjusting EISS values based on the factors determined to be relevant, determining required label format(s) for the requester, generating EISS labels based on the required label formats (including external accreditation mark(s) on the label if applicable, etc.), determining the total cost of the food item (e.g., based on cost and quantity information of each food ingredient, the requester's energy consumption, etc.), determining a recommended retail price based on suggested profit margin and/or taxation information, generating a report based on the determined information and greenhouse gas emissions, determining whether the food item complies with regulatory standards or legislative requirements based on the generated reports, generating a label based on the report and/or compliance with regulatory standards or legislative requirements, sending the generated label, report, and/or compliance information to a third party, and displaying the generated label, report, and/or compliance information to the requester.

In some embodiments, the methods may further include generating and displaying detailed explanations of carbon dioxide emissions, water consumption, energy consumption, etc. In some embodiments, the method may further include generating and displaying equivalency examples (e.g., shower time for water consumption, car distance travelled for carbon dioxide emissions). In some embodiments, the method may further include generating and displaying scores for other food items. In some embodiments, the method may further include continuously or repeatedly determining or updating scores as ingredients are added, modified, and removed. In some embodiments, the method may further include determining how the requester wants to use the labels, publishing (or sending or otherwise making available) the labels for the requester to download and save, integrating labels into larger or complete food item labels, sending labels to a printer for printing, sending labels electronically to a third party, uploading the labels to an electronic menu display system for in-premise display, uploading labels to a website or similar web server for online display, and/or associating the labels with specific instances of the food item.

FIGs. 6A-6D illustrate various examples of graphical user interfaces 600, 630, 660, 680 for calculating the EISS values of a food item using a food ingredient repository according to the various embodiments (e.g., FIGS. 5A-5D). FIG. 6A illustrates a graphical user interface 600 that enables a requester to select details of the food ingredients within the food item "Dough rise" 602. The list may include four food ingredients 604, along with information relating to their quantities 606, preparations 608 (e.g., baked or roasted), and costs 610. The first food ingredient may include details of its variations (i.e., "white", "plain", "soft"). The quantities may be expressed in two different formats (i.e., mass and volume). In an embodiment, the requester may enter the quantity in one format and the other format would be calculated. The "Add an ingredient" button 612 may allow another food ingredient to be added to the "Dough rise" food item.

The panel on the left of FIG. 6A shows alternatives for the flour 614 food ingredient. These alternatives 616 have different subtypes (e.g., "wholemeal", "almond") and variations (e.g., "self-raising", "strong"). The requester could select one of these alternatives instead of the currently selected flour food ingredient 604.

The panel 618 in FIG. 6A displays the allergen information for the food item (e.g., if it contains gluten, peanuts, or fish). The allergen information may be determined as part of the method of calculating the EISS values of a food item (e.g., as part of the blocks in FIGS. 5A-5D). Further, the allergen information for the food item may be included as part of the EISS labels. In an embodiment, a requester may be able to determine which food ingredients are responsible for the allergen by interacting with the graphical user interface (e.g., by hovering over the specific allergen information).

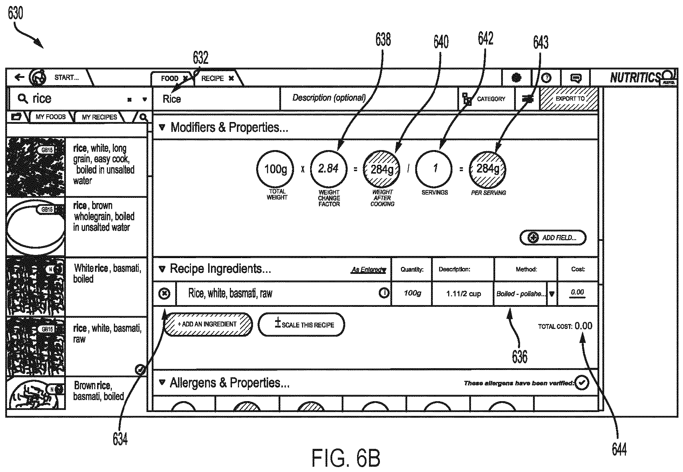

FIG. 6B illustrates a graphical user interface 630 that displays an adjustment to the EISS values for rice 632 based on it being cooked as part of its preparations (e.g., as part of block 528 with reference to FIGS. 5A-5D). The food ingredient description 634 specifies that 100 grams of "Rice, white, basmati, raw" must be "Boiled" 636. The food ingredient repository contains a "Weight Change Factor" of 2.84 638 that is used to determine that 100 grams of dried rice may become 284 grams of cooked rice 640. Further, the 284 grams of cooked rice is then divided by one serving 642 to determine that there are 284 grams of cooked rice 643 per serving. This graphical user interface also contains costing information about the rice 644, albeit that it is not being used in this example.

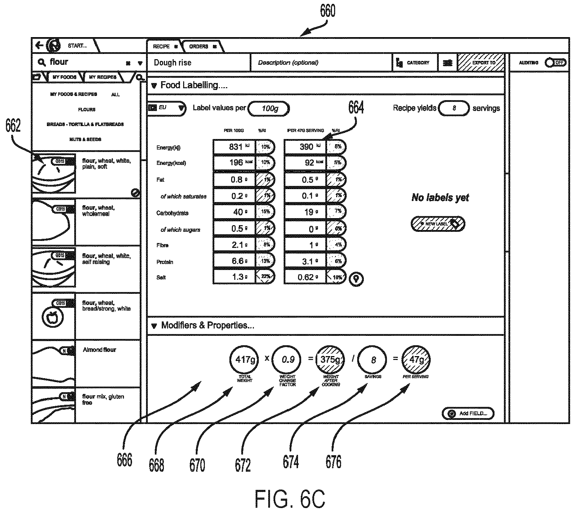

FIG. 6C illustrates a graphical user interface 660 that displays nutritional information 664 and an adjustment 666 to the EISS values for 417 grams 668 of "flour" 662. The adjustment is based on the flour being cooked as part of its preparations (e.g., as part of block 528 with reference to FIGS. 5A-5D). The food ingredient repository contains a "Weight Change Factor" of 0.9 670 that is used to determine that 417 grams of flour 668 may become approximately 375 grams of cooked flour 672. Further, the 375 grams of cooked flour 672 is then divided by eight servings 674 to determine that there are approximately 47 grams of cooked flour per serving 676.

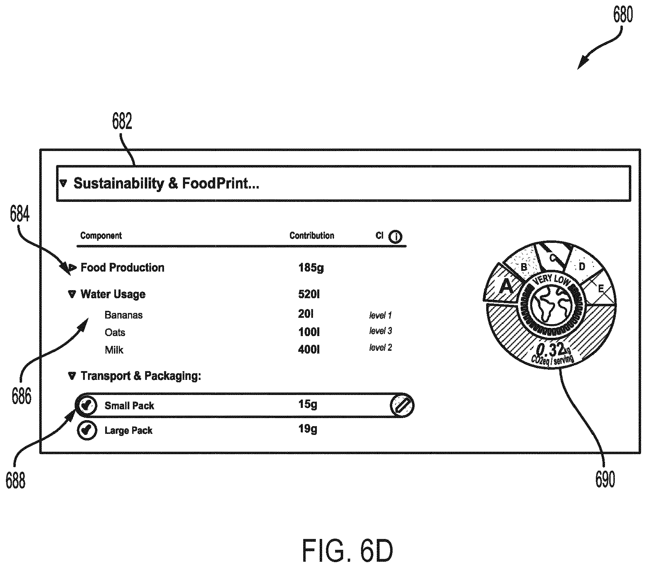

FIG. 6D illustrates a graphical user interface 680 that displays EISS values for a food item 682 (e.g., as stored in block 542 with reference to FIGS. 5A-5D). The environmental impact and sustainability factors that the requester has selected are carbon dioxide emissions 684, water consumption 686, and transport and packaging 688 (where the "Small Pack" has been selected). The total water consumption (i.e., 520 litres) 686 has been broken down for each food ingredient (i.e., bananas 20 litres, oats 100 litres, and milk 400 litres). FIG. 6D also illustrates an EISS label 690 for the food item (e.g., generated in block 554 with reference to FIGS. 5A-5D). This EISS label may be used as described in blocks 558-568 with reference to FIGS. 5A-5D.

In an embodiment, the method 500 may enable a food item manufacturer (e.g., a company that makes prepared meals) to update the contents of the food items (e.g., by changing or adding ingredients), which may then ultimately cause the EISS label associated with the food items to be updated on a webpage that includes information about the food items.

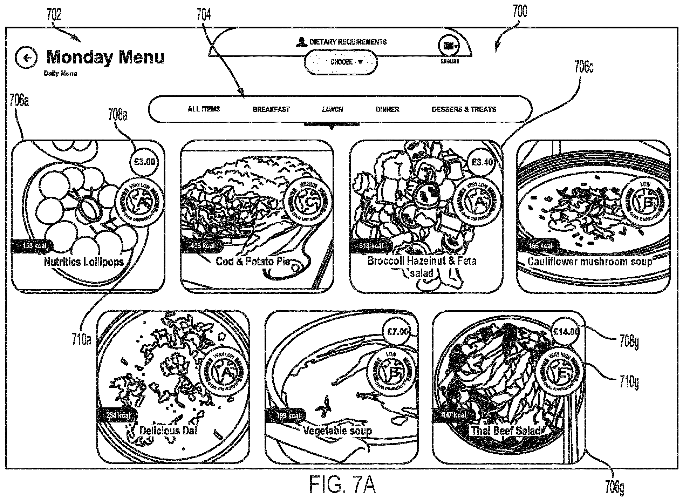

FIGs. 7A-7C are block diagrams that illustrate various examples of graphical user interfaces 700, 730, 760 for viewing and ordering food items that include EISS labels according to an embodiment in which the food item manufacturer provides meals to a reseller (e.g., a hospital, a hotel, a university) which then sells the meals online (e.g., using a website, smartphone application, tablet, smart watch). In an alternative embodiment, the food item manufacturer could sell the food items directly.

Specifically, FIG. 7A illustrates a graphical user interface 700 representing a menu for viewing the food items that may be purchased. The graphical user interface indicates that the menu is available on Mondays 702, and the user can view the food items according to the meal type 704 (i.e., "All Items", "Breakfast", "Lunch", "Dinner", and "Desserts & Treats"). The graphical user interface contains a tile 706a-706g for each food item that may contain a name for the food item (e.g., "Nutritics Lollipops" 706a, "Thai Beef Salad" 706g), a representative photo, a price 708a-708g, and a compact EISS label 710a-710g (as previously described with reference to FIG. 1D).

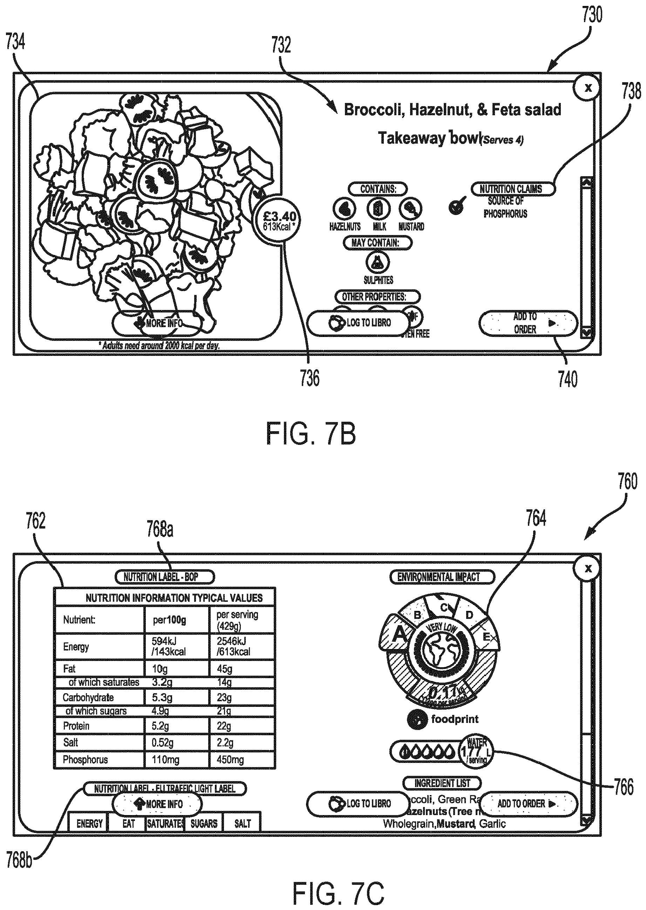

FIG. 7B illustrates a graphical user interface 730 that includes details about the food item 706c. The graphical user interface may be presented to the user when he/she actuates tile 706c in the graphical user interface 700 (e.g., by clicking on it, by tapping on it, by hovering over it). The graphical user interface 730 contains a name for the food item 732 (i.e., "Broccoli, Hazelnut, & Feta salad - Takeaway bowl"), a representative photo 734, a price 736, and summary allergen, ingredient, and nutritional information 738. Furthermore, graphical user interface 730 contains a button 740 that enables the user to order the food item 732. FIG. 7C is a block diagram that illustrates a graphical user interface 760 that includes further details about the food item 706c. The graphical user interface may be presented to the user as part of graphical user interface 730 (e.g., by clicking on "More Info"). The graphical user interface 732 contains detailed nutritional information 762, a detailed EISS label 764 (as previously described with reference to FIG. 1A), and a detailed EISS label 766 relating to a single environmental impact and sustainability factor (i.e., the water consumption per serving). The graphical user interface may identify the standard 768a-768b that was used to determine the nutritional information and the EISS labels.

In an alternative embodiment, all interactions with method 500 (with reference to FIGS. 5A-5D) may be performed using application programming interfaces (APIs).

In an alternative embodiment, method 500 (with reference to FIGS. 5A-5D) may be modified so that it is capable of receiving details (e.g., types, quantities) of all food ingredients purchased by a food item manufacturer over an extended period of time (e.g., three months, one year) and subsequently calculating one or more EISS values for the food item manufacturer as a whole over the time period. This may assist food item manufacturers that are obliged to report overall EISS values, such as "Scope 3" reporting of food and drink related gaseous emissions for ESG reporting. This may be particularly advantageous because Scope 3 emissions typically represent up to 95% of a food item manufacturer's emissions.

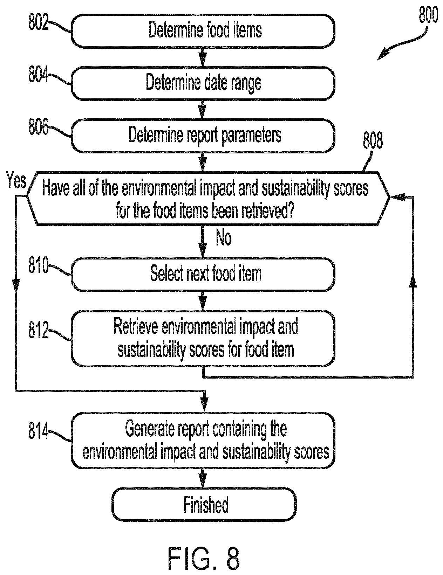

FIG. 8 is a process flow diagram illustrating a method 800 of monitoring the EISS values of one or more food items in accordance with some embodiments. Method 800 may be performed in a computing device (e.g., EIS server 1204, etc.) by any or all of the processing units (e.g., processor 1252, 1310, 1312, 1314, 1316, 1318, 1321, 1322, 1321, 1322, etc.) computing subsystems, or components (e.g., components 1270-1296, etc.) discussed in this application. Means for performing the functions of method 800 may include any or all of the processing units (e.g., processor 1252, 1310, 1312, 1314, 1316, 1318, 1321, 1322, 1321, 1322, etc.), computing subsystems, or components (e.g., components 1270-1296, etc.) discussed in this application.

In block 802, the processor may determine the food item or food items of interest to the requester. In an embodiment, the requester may be limited to food items that the requester has created. The requester may be able to select food items using a graphical user interface (e.g., selecting from a drop-down list), or the food items may be obtained from the requester's profile.

In block 804, the processor may determine the date range of interest to the requester. The requester may be able to select the date range using a graphical user interface (e.g., selecting from calendars), or the date range may be obtained from the requester's profile. If the requester does not provide a start date for the date range, then the earliest date for which there are EISS values for the food item is used. If the requester does not provide an end date for the date range, then the current date is used.

In block 806, the processor may determine the report parameters. The report parameters may include a list of the environmental impact and sustainability factors to be included, presentation and formatting (e.g., include graphs), and the output format (e.g., screen, print). In an embodiment, the requester may be able to specify the unit types (e.g., the EISS values that should be shown per portion of the food item, the EISS values that should be shown per unit of energy contained within the food item). The requester may be able to select the report parameters using a graphical user interface (e.g., selecting check boxes), using an application programming interface (API), or the report parameters may be obtained from the requester's profile. Default report parameters may be used if the requester does not provide any report parameters.

In determination block 808, the processor may determine whether all of the EISS values for the food items have been retrieved. In response to determining that all of the EISS values for the food items have not been retrieved (i.e., determination block 808 = "No"), the processor may select the next food item in block 810. In block 812, the processor may retrieve the EISS values for the selected food item (during the requested date range) (e.g., from the requester's profile, as a result of being stored there as part of block 542 with reference to FIGS. 5A-5D).

In block 814, the processor may generate the report that includes the EISS values for all of the food items in accordance with the requested report parameters (i.e., as determined in block 806). In an embodiment, the requester may be able to alter the report parameters and select new report parameters (e.g., as part of an interactive graphical user interface). The report may be saved (e.g., as part of the requester's profile), and the requester may have the option of making the report available to a third party or publicly.

In an enhanced embodiment, the processor may be configured to allow the requester to configure alerts (e.g., as part of the requester's profile) that are sent when there is an update to the EISS values for a food item. This may be useful in scenarios where the requester is a retailer and it is interested in monitoring the food items from a supplier. The report may be sent only if one or more thresholds set by the requester have been satisfied.

In an alternative embodiment, the processor may be configured to allow the requester to select two or more similar products (e.g., a strawberry smoothie, a banana smoothie, and a strawberry and banana smoothie) and compare their EISS values.

In another embodiment, the processor may be configured to allow the requester to select two or more identical products from different food manufacturers (e.g., a tuna sandwich) and compare their EISS values.

Some embodiments may include methods of monitoring the EISS values of one or more food items that include determining, by a processor, food items of interest, determining a date range of interest, determining report parameters, retrieving all scores for the food items, and generating a report based on the determined/retrieved information. In some embodiments, the methods may further include configuring alerts to be sent when scores for a food item are updated and/or sending the report to the requester or third party in response to determining that one or more requester-defined thresholds have been met. In some embodiments, the methods may further include the processor performing various operations to allow the requester to select two or more similar products and compare their EISS values. In some embodiments, the methods may further include the processor performing various operations to allow the requester to select identical products from different manufacturers and compare their EISS values.

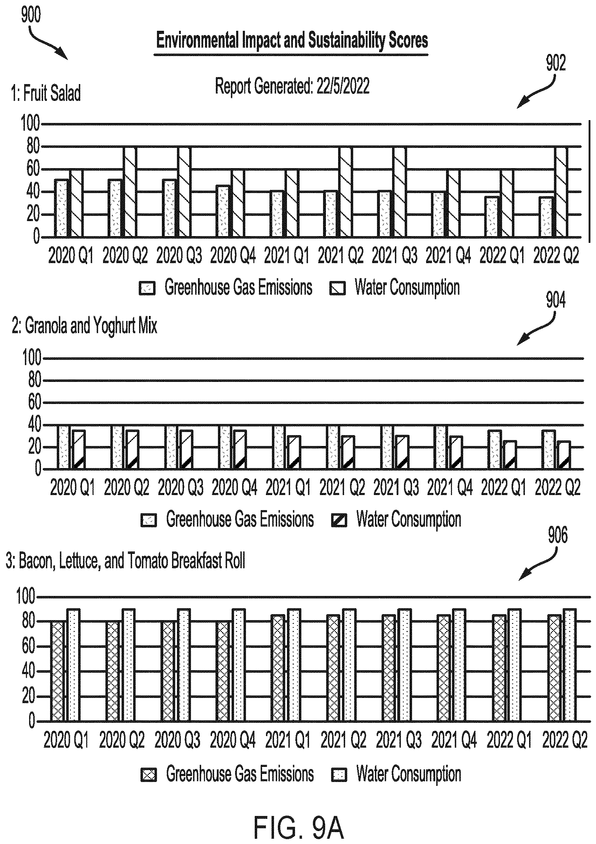

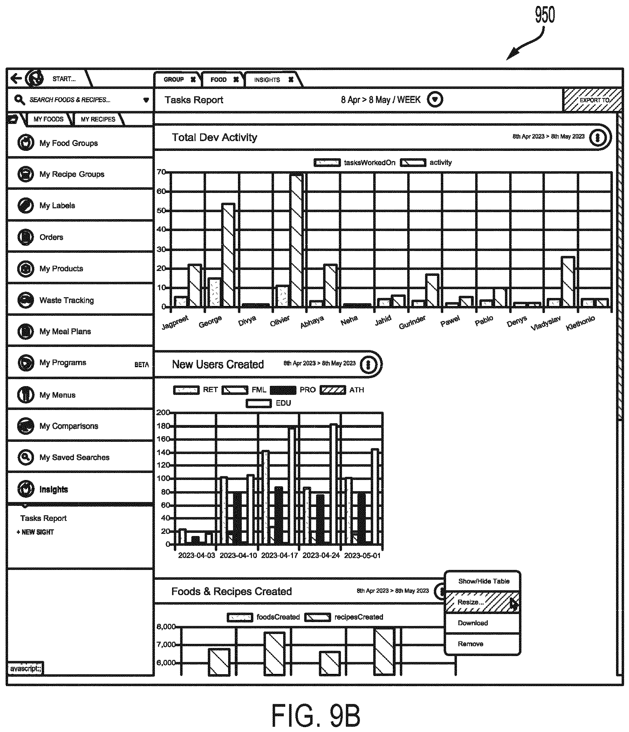

FIGs. 9A and 9B illustrate example reports 900, 950 that include EISS values for two environmental impact and sustainability factors (i.e., greenhouse gas emissions, and water consumption) and three food items (i.e., a fruit salad 902; a granola and yogurt mix 904; and a bacon, lettuce, and tomato breakfast role 906) over a period of approximately two years. In an enhanced embodiment, the processor may generate the report to also include summary information relating to the changes that occurred to the EISS values during the reporting period.

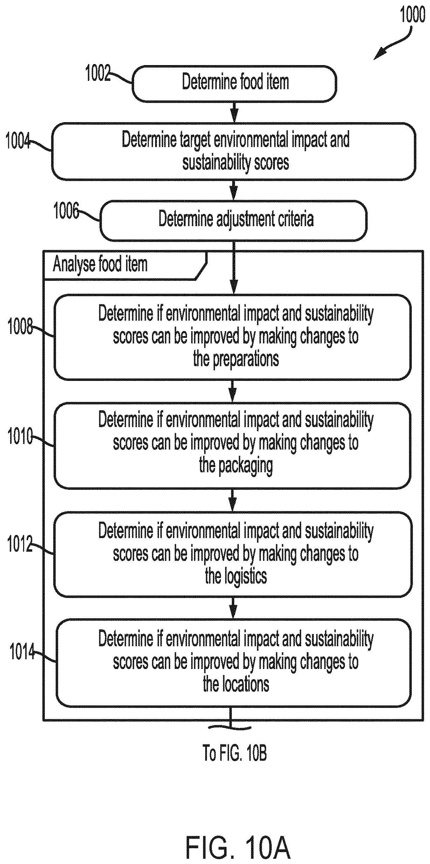

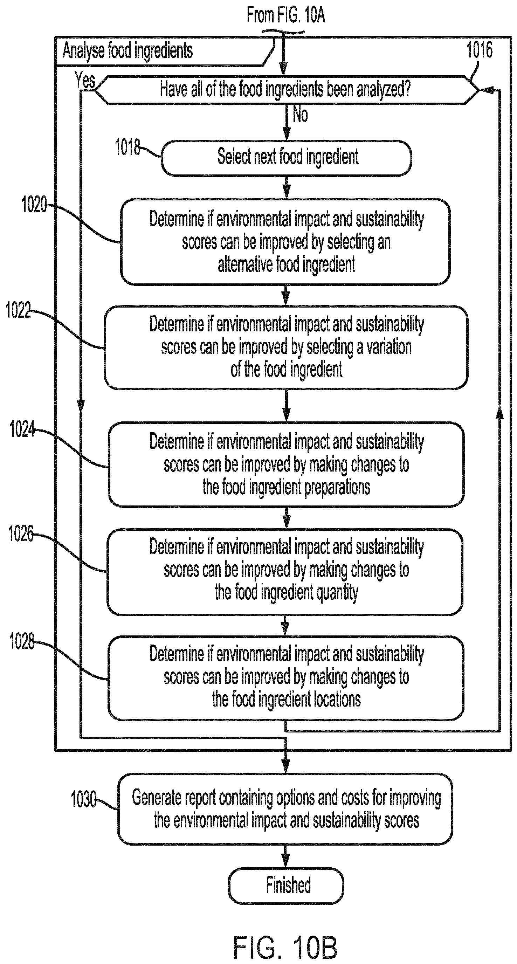

FIGs. 10A and 10B are process flow diagrams illustrating a method 1000 of making recommendations for improving the EISS values of a food item in accordance with some embodiments. Method 1000 may be performed in a computing device (e.g., EIS server 1204, etc.) by any or all of the processing units (e.g., processor 1252, 1310, 1312, 1314, 1316, 1318, 1321, 1322, 1321, 1322, etc.) computing subsystems, or components (e.g., components 1270-1296, etc.) discussed in this application. Means for performing the functions of method 1000 may include any or all of the processing units (e.g., processor 1252, 1310, 1312, 1314, 1316, 1318, 1321, 1322, 1321, 1322, etc.), computing subsystems, or components (e.g., components 1270-1296, etc.) discussed in this application.

In block 1002, the processor may receive the identity or description of a food item. This may be provided by a requester using a graphical user interface. If the EISS values of the food item have not previously been calculated, then they may be calculated as previously described (e.g., using blocks 502-558 with reference to FIGS. 5A-5D).

In block 1004, the processor may determine the target EISS values for the food item. The target EISS values may relate to some or all of the environmental impact and sustainability factors. For example, a requester may be interested in greenhouse gas emissions and water consumption, but not interested in energy consumption, packaging, plastic content, and toxins. As another example, another requester may only be interested in trying to improve the EISS values relating to packaging.

In block 1006, the processor may determine the adjustment criteria that should be considered (and not considered) as part of the recommendations for improving the EISS values of a food item. For example, a requester may be willing to consider replacing some food ingredients with alternative similar food ingredients that have better EISS values, but the same requester may not be willing to consider making logistical changes (e.g., switching to renewable energy sources). The adjustment criteria may also define limits or bounds for any adjustments. For example, a requester may only be willing to consider replacing some food ingredients for alternative similar food ingredients that have better EISS values if the unit cost of the alternative similar food ingredients is within 10% of the unit cost of the original food ingredients. Alternatively, a requester may only be willing to consider replacing food ingredients for alternative similar food ingredients that have better EISS values if the total cost for a portion of the food item does not exceed a specific cost (e.g., one Euro).

It should be understood that in some embodiments blocks 1004 and 1006 may be optional, and if they are omitted then the method assumes that the EISS values should be improved as much as possible, and that all adjustments are to be considered.

In blocks 1008-1014 the processor may analyze the food item as a complete unit in order to improve its EISS values with reference to the target EISS values and the adjustment criteria that should be considered. In block 1008, the processor may determine whether the EISS values for the food items may be improved by making changes to the preparations.

In block 1010, the processor may determine whether the EISS values for the food items may be improved by making changes to the packaging. In some embodiments, the processor may use the adjustment criteria determined in block 1006 to determine whether the EISS values for the food items may be improved by making changes to the packaging. In some embodiments, the processor may compare the EISS values of the current packaging setup against those of alternative packaging solutions and/or analyze the packaging details of the food item, including the type and quantity of materials used, the presence and type of any plastic components, the recyclability or compostability of the packaging materials, and other relevant factors. In some embodiments, in block 1010 the processor may access a database or use machine learning algorithms trained on packaging options and their associated EISS values to predict the potential EISS value improvements associated with different packaging changes. For example, the processor could determine that a switch from single-use plastic packaging to biodegradable or compostable materials could significantly lower the food item's overall EISS value. In addition ,the processor may consider the determined adjustment criteria. For example, the requester may have set certain constraints such as budget limits, user experience considerations (e.g., the need for the food item to remain visually appealing or easy to handle), or limitations related to supply chain and manufacturing capabilities. As such, after the evaluation, the processor may generate specific packaging change suggestions that could improve the food item's EISS values and account for adjustment criteria set by the requester.

In block 1012, the processor may determine whether the EISS values for the food items may be improved by making changes to the logistics. In some embodiments, the processor may use the adjustment criteria determined in block 1006 to determine whether the EISS values for the food items may be improved by making changes to the logistics. In some embodiments, the processor may analyze various characteristics of the food item's logistics chain, such as sourcing locations, transportation methods, warehouse storage practices, and delivery routes. As part of these operations, the processor may access data related to the food item's logistics chain and calculate its associated EISS values, which may be derived from multiple factors such as fuel consumption, greenhouse gas emissions, distance traveled, and energy used in storage facilities. The processor may use a database of logistical options or machine learning algorithms trained on similar data to compare the EISS values against those of alternative logistics scenarios, which may include changes such as sourcing from different locations, using more energy-efficient transportation methods, optimizing warehouse practices for reduced energy usage, or modifying delivery routes for reduced travel distances. After the evaluation, the processor may generate specific logistics change suggestions that could improve the food item's EISS values and account for adjustment criteria set by the requester.

In block 1014, the processor may determine whether the EISS values for the food items may be improved by making changes to the locations. In some embodiments, the processor may use the adjustment criteria determined in block 1006 to determine whether the EISS values for the food items may be improved by making changes to the locations. In some embodiments, the processor may analyze various characteristics related to the geographical sourcing and processing locations of the food item. For example, the processor may access data concerning the current sourcing and processing locations, including the environmental regulations of these regions, their climate, the distance to major markets, the means of transport available, and other similar factors. The processor may use this information to calculate the current EISS values associated with these locations, including factors such as greenhouse gas emissions from transportation, the carbon footprint of production processes in these locations, the water usage for food production and processing, and the amount of waste produced and its handling, among other considerations. The processor may use a database that identifies different regions, their environmental impact, and the potential logistics options to compare these EISS values against those of alternative locations. These alternatives could range from sourcing from more environmentally friendly regions, processing in areas with better waste management systems, or closer to the end market to minimize transportation emissions. After the evaluation, the processor may generate specific location change suggestions that could improve the food item's EISS values and account for adjustment criteria set by the requester. For example, the requester may only be willing to change locations if the associated increase in cost does not exceed a certain threshold. The processor may generate suggested modifications that could decrease the EISS values while still abiding by the requester's adjustment criteria.

In blocks 1016-1028, the processor may analyze the food ingredients contained within the food item in order to improve their EISS values with reference to the target EISS values and the adjustment criteria that should be considered for the food item. In determination block 1016, the processor may determine whether all of the food ingredients have been analyzed. In response to determining that all of the food ingredients have not been analyzed (i.e., determination block 1016 = "No"), the processor may select next food ingredient in block 1018.

In block 1020, the processor may determine whether the EISS values for the food ingredient may be improved by selecting an alternative similar food ingredient (e.g., as described in block 322 with reference to FIG. 3B). In some embodiments, the processor may identify the food ingredient based on data received in block 1002, retrieve or determine its current EISS values, access a comprehensive database (e.g., the food ingredient repository, etc.) that contains EISS values of a wide range of food ingredients (including information about each ingredient's water usage, energy consumption, greenhouse gas emissions, land use, packaging, plastic content, toxins, and other factors contributing to the environmental impact and sustainability), identify potential similar food ingredients (e.g., based on the function they serve in the food item, their taste profiles, their nutritional content, and other food science considerations), and retrieve the EISS values for the potentially similar food ingredients, and compares the current EISS values of the original ingredient to the EISS values of each potential alternative ingredient. If an alternative ingredient has lower EISS values, the processor may consider it as a potential better choice. The processor may also take into account the adjustment criteria from block 1006, which could limit the alternatives that can be considered based on cost, taste alterations, availability, potential allergy concerns, cultural considerations, etc. By comparing EISS values and considering adjustment criteria, the processor may provide recommendations for alternative ingredients that could potentially lower the food item's environmental impact and increase its sustainability.

In block 1022, the processor may determine whether the EISS values for the food ingredient may be improved by selecting a variation of the food ingredient. As mentioned above, the food ingredient repository may store information regarding variations of the same food ingredient (e.g., a single food ingredient may be fresh, dried, or canned, and this may impact its EISS value). Thus, the variation may include different forms (e.g., fresh, dried, canned), different cultivars, different breeds, different processing methods, different sourcing (e.g., different manufacturers) of the same food ingredient, etc. In some embodiments, each variation may have its associated EISS values that consider factors such as water usage, energy consumption, greenhouse gas emissions, land use, packaging, plastic content, toxins, etc. In some embodiments, the processor may determine whether the EISS values for the food ingredient may be improved by selecting a variation of the food ingredient by identifying the food ingredient based on the data received in block 1002, retrieving the current EISS values of that ingredient, accessing food ingredient repository, identifying potential variations of the identified food ingredient and retrieving their EISS values (e.g., the variations could be based on different agricultural methods (e.g., organic versus conventional), geographical origin, processing methods (e.g., unprocessed, processed, heavily processed), or etc.), and comparing the EISS values of the original food ingredient with those of the identified variations. If a variation has lower EISS values, the processor could determine that choosing this variation could lead to an improvement in the environmental impact and sustainability score of the food item. The processor may also consider the adjustment criteria provided in block 1006. For example, the processor could exclude variations that fail to meet certain criteria such as cost, availability, regulatory standards, cultural preferences, taste alterations, etc.

In block 1024, the processor may determine whether the EISS values for the food ingredient may be improved by making changes to the preparation of the food ingredient. As mentioned above, different methods of preparation may have various different impacts on the EISS values of a food ingredient. In some embodiments, the processor may determine the current preparation method of the food ingredient and query a database or repository that includes information on how different preparation methods impact the EISS values of food ingredients. The database may include data on a wide range of preparation methods, such as raw, boiled, steamed, baked, fried, grilled, etc. each of which may have a distinct effect on the EISS values due to differences in energy consumption, water usage, nutrient loss, cooking time, etc. For example, boiling vegetables might have a lower EISS value than frying due to less energy usage, while raw preparation might have even lower EISS values since it does not require any energy for cooking. Alternatively, grilling might have higher EISS values due to the energy source used and the emissions produced. The processor may compare the EISS values associated with the current preparation method to those associated with alternative methods. If a different method of preparation has a lower EISS value, the processor may determine that switching to this method could decrease the environmental impact and improve the sustainability score of the food item. The processor may also consider the adjustment criteria provided in block 1006. For example, the processor could exclude changes in preparation methods that do not meet certain criteria such as taste preference, cultural acceptability, health considerations, equipment availability, preparation time, etc.

In block 1026, the processor may determine whether the EISS values for the food ingredient may be improved by making changes to the quantity of the food ingredient. In some embodiments, the processor may determine the current quantity of the ingredient used, query a database or repository that stores information about the EISS values for different quantities of food ingredients (e.g., EISS value per unit of the ingredient, etc.), analyze the impact of changes in the quantity of a specific ingredient on the EISS values, and compare the current EISS values associated with the quantity of the ingredient to potential EISS values for different quantities. The processor may generate a suggested change recommendation if, for example, it determines that decreasing the quantity of a high-impact ingredient reduces the overall EISS value without significantly affecting the taste or nutritional value of the food item. As another example, the processor may generate a change recommending in response to determining that increasing the quantity of a low-impact ingredient could reduce the overall EISS value by displacing a portion of a higher-impact ingredient. The processor may also consider the adjustment criteria provided in block 1006. For example, the processor could exclude recommendations that significantly change the taste or texture of the food item.

In block 1028, the processor may determine whether the EISS values for the food ingredient may be improved by making changes to the locations (e.g., origin location, destination location) of the food ingredient. As mentioned above, locations may have a significant impact on the EISS values due to factors such as transportation emissions and regional environmental regulations. In some embodiments, the processor may determine the current origin and destination locations for the ingredient, and query a database or repository that stores EISS values associated with different geographical regions. The information in the database may consider factors such as the distance between origin and destination (influencing transportation emissions), the environmental regulations in different areas, local farming practices, and the typical energy sources used in these locations. The processor may determine the potential EISS values for the ingredient if it were sourced from distinct locations, if it were delivered to different destinations, identify regions that produce the ingredient with lower environmental impacts, determine regions closer to the destination that would reduce transportation emissions, etc. The processor may generate suggested changes to the locations of the food ingredient that could lower its EISS values while still meeting the requester's adjustment criteria. For example, the processor may recommend sourcing an ingredient locally to reduce transportation emissions or suggest sourcing from a region that uses more sustainable farming practices.

In block 1030, the processor may generate a report that includes one or more options for improving the EISS values for the food item. In an embodiment, the report may only contain options that improve the EISS values of the food item to match or exceed the target EISS values for the food item. Further, the cost of each item may be included in the report. In an embodiment, a report may contain multiple options for improving the EISS values for the food item, and these options may be ranked (e.g., by increasing cost).

Some embodiments may include methods of making recommendations for improving the EISS values of a food item that include receiving, by a processor, a food item identity or description, determining target EISS values for the food item, determining adjustment criteria to be considered for recommendations to improve scores (criteria may include willingness to replace ingredients, make logistical changes, set cost limits, etc.), analysing the food item as a complete unit, analysing the food ingredients individually, and generating a report.

In some embodiments, analysing the food item as a complete unit may include determining whether the scores may be improved by changing preparations, changing packaging, changing logistics and/or changing locations. In some embodiments, analysing the food item as a complete unit may include analysing the complete food item to improve its scores with reference to the target scores and adjustment criteria.

In some embodiments, analysing the food ingredients individually may include analysing each ingredient in the food item to determine whether the scores may be improved by selecting alternative ingredients, selecting a variation of the ingredient, changing the preparation of the ingredient, changing the quantity of the ingredient, and/or changing locations related to the ingredient. In some embodiments, analysing the food ingredients individually may include analysing each ingredient in the food item to improve its scores with reference to the target scores and adjustment criteria.

In some embodiments, generating the report may include generating the report to include one or more options for improving the scores for the food item, to include only options that improve the scores to match or exceed the target scores, to include the cost of each item in the report, and/or to rank multiple available options (e.g., by increasing cost).

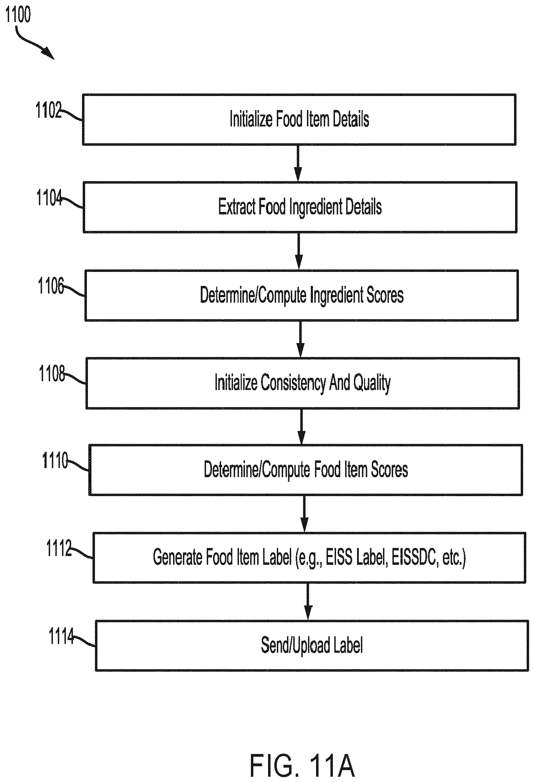

FIG. 11A is process flow diagram illustrating a method 1100 of determining the EISS value of a food item using a food ingredient in accordance with some embodiments. Method 1100 may be performed in a computing device (e.g., EIS server 1204, etc.) by any or all of the processing units (e.g., processor 1252, 1310, 1312, 1314, 1316, 1318, 1321, 1322, 1321, 1322, etc.) computing subsystems, or components (e.g., components 1270-1296, etc.) discussed in this application. Means for performing the functions of method 1100 may include any or all of the processing units (e.g., processor 1252, 1310, 1312, 1314, 1316, 1318, 1321, 1322, 1321, 1322, etc.), computing subsystems, or components (e.g., components 1270-1296, etc.) discussed in this application.

In block 1102, the processor may initialize food item details. For example, the processor may receive a description of the food item and create a structured format for the food item description including fields such as type, subtype, variations, preparations, quantity, and origin location.

In block 1104, the processor may extract food ingredient details. For example, the processor may use a combination of text parsing and segmentation techniques to extract details of at least one food ingredient from the food item description in block 1104. In some embodiments, the processor may apply machine learning techniques and/or image-based text analysis to further extract and verify the food ingredient details.

In block 1106, the processor may determine ingredient scores. For example, the processor may fetch matching food ingredients and their associated EISS values from the food ingredient repository, evaluate the level of match for the fetched ingredients based on one or more cumulative and weighted match rules, select the food ingredients with the highest match levels for the next steps, and adjust the EISS values for these selected ingredients based on the match level, variations, preparations, quantity, and location.

In block 1108, the processor may check consistency and quality. For example, the processor may assess if all of the food ingredient descriptions are consistent. If not, the processor may generate an alert. In some embodiments, the processor may determine a quality metric for the EISS values and generate the alert if this metric falls below a predetermined threshold.

In block 1110, the processor may determine food item scores. For example, the processor may determine the scores for the food item based on the adjusted EISS values for the food ingredients. In some embodiments, the processor may further adjust the scores based on additional factors such as the preparations, packaging, logistics, and locations of the food item. For example, the processor may determine whether the food item is cooked, and adjust the mass, water consumption, and energy consumption associated with the food item in response to determining that the food item is cooked. In some embodiments, the processor may determine or adjust the EISS values based on factors that include gaseous emissions, energy consumption, water consumption, packaging, plastic content, biodiversity impact, fair trade and ethical production, toxins, overproduction, and end-of-life handling.

In block 1112, the processor may generate a food item label. For example, the processor may determine the environmental impact and sustainability unit types that are relevant to the requester (e.g., portions, etc.), determine the requested or required label format, determine the total cost of the food item, determine the cost and quantity information associated with the food ingredients, determine environmental impact and sustainability factors relating to the energy consumption associated with the food item, and generate a food item EISS label that includes (or based on) any or all such information in the required format.

In block 1114, the processor may send or upload the generated food item label. For example, the processor may upload the generated food item EISS label to a website or web server so that it causes the website or web server to automatically include the label in an electronic listing.

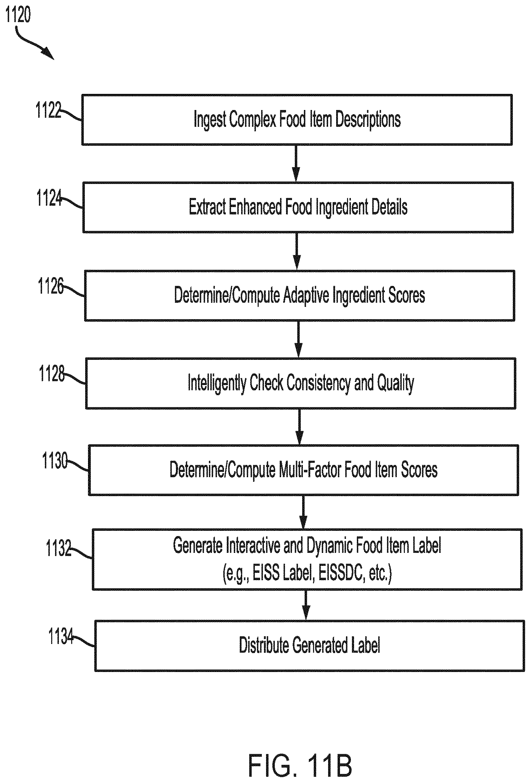

FIG. 11B is process flow diagram illustrating another method 1120 of determining the EISS value of a food item using a food ingredient repository in accordance with some embodiments. Method 1120 may be performed in a computing device (e.g., EIS server 1204, etc.) by any or all of the processing units (e.g., processor 1252, 1310, 1312, 1314, 1316, 1318, 1321, 1322, 1321, 1322, etc.) computing subsystems, or components (e.g., components 1270-1296, etc.) discussed in this application. Means for performing the functions of method 1120 may include any or all of the processing units (e.g., processor 1252, 1310, 1312, 1314, 1316, 1318, 1321, 1322, 1321, 1322, etc.), computing subsystems, or components (e.g., components 1270-1296, etc.) discussed in this application.

In block 1122, the processor may ingest complex food item descriptions from one or more sources. For example, it may receive a description of the food item, which may include non-textual data such as images, diagrams, or other multimedia. In some embodiments, the processor may leverage advanced natural language processing (NLP) and computer vision algorithms to create a structured representation of the food item descriptions, encapsulating attributes such as type, subtype, variations, preparations, quantity, and origin location into a structured format (e.g., an information structure, record, etc.).

In block 1124, the processor may extract enhanced food ingredient details. For example, the processor may deploy a unique ensemble of machine learning techniques (including convolutional neural networks (CNN) for image-based text analysis and named entity recognition (NER) for text parsing and segmentation) to extract details of food ingredients from the complex food item description. In some embodiments, the processor may further refine and verify these details using an intelligent feedback loop between the NLP and computer vision components.

In block 1126, the processor may determine adaptive ingredient scores. For example, the processor may generate a more comprehensive adaptive ingredient score by applying a graph-based search algorithm to the food ingredient repository to find not only exact matches for the ingredients but also related entries based on food family, origin, etc. In some embodiments, the processor may generate context-based match rules that are not only cumulative and weighted but also adaptive based on the type of food item. In some embodiments, the processor may incorporate factors like seasonal availability and sourcing practices in the score adjustments.

In block 1128, the processor may intelligently check consistency and quality. For example, the processor may implement an advanced consistency check by using semantic similarity techniques to ensure coherence in the food ingredient descriptions, trigger an alert for any potential discrepancies, and/or generate a quality metric for the sustainability scores based on multiple factors, including data quality, data sources, and the reliability of the extraction process.

In block 1130, the processor may determine or compute multi-factor food item scores. For example, the processor may determine the multi-factor food item scores using a mathematical model that incorporates the ingredient scores and other factors such as packaging, logistics, and locations of the food item, potential waste generated, etc. In some embodiments, the processor may use an Al-based prediction model to forecast the environmental impact of food items under different scenarios, such as changes in the supply chain, ingredient substitution, etc.

In block 1132, the processor may generate an interactive and dynamic food item label. For example, the processor may implement an interactive label generation system that allows users to select units and format based on their preference and dynamically updates the label based on user inputs. In some embodiments, the processor may implement a comprehensive cost estimation system that accounts for the cost of ingredients and the environmental and sustainability costs associated with the entire lifecycle of the food item, from sourcing to consumption to waste disposal.

In block 1134, the processor may distribute the generated label. For example, the processor may implement an intelligent distribution system that automatically uploads the food item labels to multiple platforms including websites, third party systems, mobile applications, digital media, etc. based on the type of food item, the preferences of the requester, compliance requirements, etc.

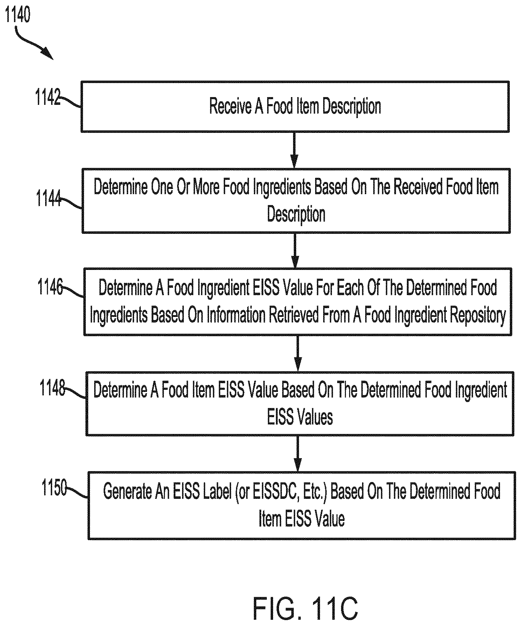

FIG. 11C is a process flow diagram illustrating another method 1140 of determining the EISS value of a food item using a food ingredient repository in accordance with some embodiments. Method 1140 may be performed in a computing device (e.g., EIS server 1204, etc.) by any or all of the processing units (e.g., processor 1252, 1310, 1312, 1314, 1316, 1318, 1321, 1322, 1321, 1322, etc.) computing subsystems, or components (e.g., components 1270-1296, etc.) discussed in this application. Means for performing the functions of method 1140 may include any or all of the processing units (e.g., processor 1252, 1310, 1312, 1314, 1316, 1318, 1321, 1322, 1321, 1322, etc.), computing subsystems, or components (e.g., components 1270-1296, etc.) discussed in this application.

In block 1142, the processor may receive a food item description. That is, in block 1142, the computing device may receive a detailed description of the food item. The detailed description may include the food item's name, type, subtype, preparation method, and other relevant attributes that define the food item.

In block 1144, the processor may determine one or more food ingredients based on the received food item description. For example, the computing device may determine the specific ingredients that make up the food item based on the received food item description, which may be achieved by parsing the description and identifying the constituent ingredients. In some embodiments, the processor may determine the food ingredients based on the received food item description by using a machine learning technique in conjunction with image-based text analysis to determine the food ingredient type, the food ingredient subtype, the food ingredient variation, the food ingredient preparation, the food ingredient quantity and/or the food ingredient origin location.

In block 1146, the processor may determine a food ingredient EISS value for each of the determined food ingredients based on information retrieved from a food ingredient repository. For example, the computing device may fetch information from a food ingredient repository for each of the identified ingredients. The food ingredient repository may include previously calculated or measured EISS values for a large number of food ingredients. Each ingredient's EISS value may take into account its environmental impact based on factors such as its carbon footprint, water usage, biodiversity impact, etc.

In some embodiments, determining the food ingredient EISS value for each of the determined food ingredients based on information retrieved from the food ingredient repository in block 1146 may include querying the food ingredient repository to retrieve matching food ingredients and EISS values associated with the matching food ingredients, applying one or more match rules to determine match levels for the retrieved matching food ingredients, and selecting the retrieved matching food ingredients with the highest match levels. In some embodiments, applying the match rules to determine the match levels for the retrieved matching food ingredients may include applying at least two match rules that are cumulative and weighted.

In some embodiments, determining the food ingredient EISS value for each of the determined food ingredients based on information retrieved from the food ingredient repository in block 1146 may include adjusting the food ingredient EISS values based on a match level, a food ingredient variation, a food ingredient preparation, a food ingredient quantity, and/or a food ingredient location.

In some embodiments, determining the food ingredient EISS value for each of the determined food ingredients based on information retrieved from the food ingredient repository in block 1146 may include generating an alert in response to determining that a description of at least one of the food ingredients is not consistent or in response to determining that a quality metric of the food item EISS value is below a threshold value. In some embodiments, determining the food ingredient EISS value for each of the determined food ingredients based on information retrieved from the food ingredient repository in block 1146 may include adjusting a food item mass value, a food item water consumption value, and a food item energy consumption value in response to determining that a food item preparation value indicates that the food item was cooked, and adjusting the food item EISS value based on the adjusted food item mass value, the adjusted food item water consumption value, and the adjusted food item energy consumption value.

In some embodiments, determining the food ingredient EISS value for each of the determined food ingredients based on information retrieved from the food ingredient repository in block 1146 may include determining a food item EISS value based on a gaseous emissions value, an energy consumption value, a water consumption value, a packaging value, a plastic content value, a biodiversity impact value, a fair trade value, an ethnical production value, a toxins value, an overproduction value, and/or an end-of-life handling value. In some embodiments, determining the food ingredient EISS value for each of the determined food ingredients based on information retrieved from the food ingredient repository in block 1146 may include adjusting the food item EISS value based on a food item preparation, a food item packaging, a food item logistic, and/or a food item location.

In block 1148, the processor may determine a food item EISS value based on the determined food ingredient EISS values. For example, after obtaining the EISS values for each ingredient, the computing device may aggregate the EISS values to determine the overall EISS value for the food item. The aggregation may be a simple sum, a weighted average, or a more complex function that accounts for how the environmental impacts of the ingredients interact.

In block 1150, the processor may generate an EISS label (or EISSDC, etc.) based on the determined food item EISS value, which may include fields for the food item details, manufacturer details, food ingredients, cryptographic measures to guarantee the authenticity of the label, and other relevant components of a label information structure (e.g., label information structure 200, etc.). In some embodiments, the EISS label may include a numerical score, a color-coded indicator, and/or other information that clearly communicates the food item's environmental impact to consumers. In some embodiments, the processor may generate the EISS label (or EISSDC, etc.) in block 1150 to also include information that causes a website or web server that receives the label to automatically verify the authenticity of the item EISS label and/or automatically include the food item EISS label in an electronic listing in response to verifying the authenticity of the item EISS label.

In some embodiments, as part of the operations in block 1150, the processor may upload the food item EISS label to a website or web server, which may be configured to receive and verify the authenticity of the item EISS label, and automatically include the food item EISS label in an electronic listing in response to verifying the authenticity of the item EISS label. In some embodiments, generating the EISS label based on the determined food item EISS value in block 1150 may include generating an encrypted label information structure, generating an environmental impact and sustainability score digital certificate (EISSDC), generating the EISS label as a non-fungible token (NFT) and/or using a blockchain-based distributed ledger to secure the EISS label.

In some embodiments, generating the EISS label based on the determined food item EISS value in block 1150 may include determining environmental impact and sustainability unit types relevant to a requester, determining label format associated with the requester, and generating the EISS label in the determined label format based on the determined food item EISS value and the determined environmental impact and sustainability unit types. In some embodiments, generating the EISS label based on the determined food item EISS value in block 1150 may include determining a total cost of the food item based on cost information associated with each of the determined food ingredients, quantity information associated with each of the determined food ingredients, and one or more environmental impact and sustainability factors relating to energy consumption associated with the food item, and generating the EISS label to include the determined total cost of the food item.

Some embodiments may include methods of monitoring the environmental impact and sustainability score (EISS) value of a food item that include identifying a food item, determining a date range, determining the report parameters, retrieving EISS values for the food item based upon the date range and the report parameters, and generating a report for the food item using the EISS values.

In some embodiments, identifying a food item may include limiting a requester to selecting a food item that it has created. In some embodiments, determining the report parameters may include determining the environmental impact and sustainability factors to be included in the report. In some embodiments, the environmental impact and sustainability factors to be included in the report include one or more of gaseous emissions, energy consumption, water consumption, packaging, plastic content, biodiversity impact, fair trade and ethnical production, and toxins. In some embodiments, determining the report parameters may include determining the unit types to be used in the report. In some embodiments, the unit types to be used in the report include one or more of portions, mass, and energy.

In some embodiments, generating a report for the food item using the EISS values may include making the report available publicly. In some embodiments, generating a report for the food item using the EISS values may include sending an alert in response to determining that the recipient has registered an interest in monitoring the EISS value of the food item. In some embodiments, sending an alert in response to determining that the recipient has registered an interest in monitoring the EISS value of the food item may include sending an alert in response to determining that a threshold has been satisfied.

In some embodiments, identifying a food item may include identifying two food items, and generating a report for the food item using the EISS values may include generating a report that compares the EISS values of the two food items.

Some embodiments may include methods of making recommendations for improving the EISS values of a food item by identifying a food item, determining the target EISS values for the food item, determining the adjustment criteria for improving the EISS values of the food item, analyzing the food item in order to improve its EISS values with reference to the target EISS values and the adjustment criteria, and generating a report containing an option for improving the EISS values for the food item.

In some embodiments, determining the adjustment criteria for improving the EISS values of the food item may include determining limits or bounds for any adjustments. In some embodiments, analyzing the food item in order to improve its EISS values with reference to the target EISS values and the adjustment criteria may include analyzing the food item as a complete unit. In some embodiments, analyzing the food item as a complete unit may include determining if the EISS values for the food item can be improved by making changes to at least one of the preparations, packaging, logistics, and locations of the food item. In some embodiments, analyzing the food item in order to improve its EISS values with reference to the target EISS values and the adjustment criteria may include analyzing the food ingredients contained within the food item.

In some embodiments, analyzing the food ingredients contained within the food item may include determining if the EISS values for the food ingredient can be improved by selecting an alternative similar food ingredient. In some embodiments, analyzing the food ingredients contained within the food item may include determining if the EISS values for the food ingredient can be improved by selecting a variation of the food ingredient. In some embodiments, analyzing the food ingredients contained within the food item may include determining if the EISS values for the food ingredient can be improved by making changes to the preparation of the food ingredient. In some embodiments, analyzing the food ingredients contained within the food item may include determining if the EISS values for the food ingredient can be improved by making changes to the quantity of the food ingredient.

In some embodiments, analyzing the food ingredients contained within the food item may include determining if the EISS values for the food ingredient can be improved by making changes to the locations of the food ingredient. In some embodiments, generating a report containing an option for improving the EISS values for the food item may include generating a report containing at least two options for improving the EISS values for the food item.

In some embodiments, the methods may include receiving, via the network interface, a digital food item description, parsing, by the processor, the received digital food item description to determine one or more constituent food ingredients (in which the parsing involves a predefined linguistic processing algorithm stored in the memory), accessing, by the processor, a cloud-based food ingredient repository to retrieve environmental and sustainability data associated with each of the determined food ingredients, calculating, by the processor, a food ingredient EISS value for each of the determined food ingredients based on the retrieved environmental and sustainability data (in which the calculating involves an EISS computation algorithm stored in the memory), aggregating, by the processor, the calculated food ingredient EISS values to determine an overall food item EISS value (in which the aggregating involves a weighted sum method), generating, by the processor, a digital EISS label (or EISSDC) based on the determined food item EISS value, and transmitting, via the network interface, the digital EISS label for display.

In some embodiments generating the digital EISS label (or EISSDC) may include the processor receiving the determined food item EISS value as an input, calling a 'GenerateLabel' function with the determined food item EISS value as an argument, initializing a new variable "label" as an empty string or a predefined template, appending a statement to the "label" variable specifying the EISS value of the food item, generating a QR code or barcode representing the 'label' using a predefined encoding algorithm for easy scanning and digital reading, and returning the digital EISS label as a file in a custom or selected standardized format with the QR code or barcode and text included. The processor may then save the returned digital EISS label file to a predetermined location or transmits it via the network interface for display.

Various embodiments illustrated and described are provided merely as examples to illustrate various features of the claims. However, features shown and described with respect to any given embodiment are not necessarily limited to the associated embodiment and may be used or combined with other embodiments that are shown and described. Further, the claims are not intended to be limited by any one example embodiment. For example, one or more of the operations of the methods 300, 500, 800, 1000, 1100, 1120, 1140 may be substituted for or combined with one or more operations of the methods 300, 500, 800, 1000, 1100, 1120, 1140 and vice versa.

It should be understood that any or all of the methods 300, 500, 800, 1000, 1100, 1120, 1140 discussed in this application may be computer-implemented methods for determining an environmental impact and sustainability score (EISS) of a food item, which may be performed by a computing system that includes a processor, a memory, and a network interface. For example, any or all of the methods 300, 500, 800, 1000, 1100, 1120, 1140 may be perform in a computing device for calculating and expressing the Environmental Impact and Sustainability Score (EISS) of a food product, which may represent the aggregate ecological footprint of the individual ingredients involved in the product's formulation. The application of technology to promote sustainable practices in the food industry has gained significant attention in recent years. Environmental concerns are becoming increasingly prevalent, and there is a rising demand for more transparency in the environmental impact of food products. The methods 300, 500, 800, 1000, 1100, 1120, 1140 for quantifying and expressing the environmental impact and sustainability of food items discussed in this application could greatly aid in making more environmentally conscious decisions. These methods 300, 500, 800, 1000, 1100, 1120, 1140 may include evaluating individual food ingredients, their environmental impacts, and their overall contribution to the environmental impact of the final food product. This could promote sustainable choices in food production and consumption, thereby reducing the environmental footprint of the food industry.

In addition, some of the methods 300, 500, 800, 1000, 1100, 1120, 1140 discussed above include determining the environmental and sustainability score of food items by performing a combination of operations that have a synergistic interaction and create a transformative effect. For example, methods 300, 500, 800, 1000, 1100, 1120, 1140 may include extracting details of the food item through a combination of text parsing and machine learning techniques. The inclusion of machine learning in conjunction with image-based text analysis may add a unique layer of complexity and accuracy in extracting food ingredient details. In addition, the 300, 500, 800, 1000, 1100, 1120, 1140 may include scoring the food items based on environmental impact and sustainability, which goes far beyond conventional techniques, technologies or solutions. For example, in some embodiments, the methods 300, 500, 800, 1000, 1100, 1120, 1140 include adjusting the scores based on a variety of factors, including variations, preparations, quantity, location, and even cooking methods. This nuanced approach takes into account multiple dimensions, which may significantly improve upon existing solutions to evaluating food items. The methods 300, 500, 800, 1000, 1100, 1120, 1140 may also automatically provide a holistic view of the cost of a food item by calculating the total cost of the food item not just based on ingredient costs but also to incorporate environmental impact and sustainability factors relating to energy consumption, etc. This far exceeds the functionalities or capabilities of conventional techniques, technologies or solutions.

Moreover, methods 300, 500, 800, 1000, 1100, 1120, 1140 may also include generating custom-made tamper-resistant self-verifying labels that cater to a very specific set of needs and requirements, consider a specific and focused set of factors, and exist in various forms, including encrypted information structures, digital certifications (e.g., EISSDC), and NFTs, any or all of which may be protected through distributed ledgers. Generating these forms of labels, digital certificates, NFTs, and distributed ledgers may signify a considerable advancement over traditional solutions. For example, encrypted labels and digital certificates may bolster the integrity and authenticity of EISS data, making it resistant to undetected tampering or alteration, thus boosting system trustworthiness. NFTs further enhance this process by assigning a unique identifier to each food item's EISS, promoting traceability and verification of a food item's EISS throughout its existence. Utilizing distributed ledger technology, such as blockchain, may greatly increase the transparency of the EISS procedure and enable independent tracing and verification of all transactions and modifications, minimizing opportunities for fraud or misinformation. The digital capabilities of these tools may also facilitate efficient and standardized sharing of information across various platforms and stakeholders in the supply chain, ranging from food producers to consumers. This may result in a unified presentation and understanding of the EISS. In addition, tokenizing EISS as NFTs may stimulate the development of a marketplace that provides further incentive for producers to invest in sustainable practices.

FIGs. 12A and 12B are component block diagrams that illustrate an example network 1200 that includes environmental impact and sustainability (EIS) server 1204 and example components within an EIS server 1204 that may be used to implement some embodiments. In particular, FIG. 12A illustrates that the network 1200 may include a manufacturer device 1202 of a food item manufacturer, an environmental impact and sustainability (EIS) server 1204, an internal food ingredient repository 1206, an external food ingredient repository 1208, a restaurant (or reseller, etc.) server 1210, an in-store (or on-premise, etc.) display device 1212, user devices 1214, 1216. In the illustrated example, user device 1214 connects to the restaurant server 1210 and user device 1216 connects to the EIS server 1204. That is, an independent user (e.g., a food-conscious person) may connect to the EIS server 1204 via user device 1216 (e.g., a smartphone).

FIG. 12B illustrates that the EIS server 1204 may include hardware components that include a processor 1252, a memory 1254, a network interface card (NIC) 1256, and input/output (I/O) ports 1258. The EIS server 1204 may include software components that include an operating system 1260, customized EISS application software 1262, customized EISS network software 1264, and/or customized EISS security software 1266. The EIS server 1204 may also include specialized modules or components configured to implement algorithms for performing the operations of the methods described above. The example specialized components illustrated in FIG. 12B include a food item description retriever component 1270, a food ingredient retriever component 1272, a food ingredient extractor component 1274, a food ingredient analyzer component 1276, a food ingredient EISS value generator component 1278, a food item EISS value generator component 1280, a matching food ingredient EISS retriever component 1282, a food ingredient matcher component 1284, a food ingredient selector component 1286, a food ingredient adjuster component 1288, an EISS aggregator component 1290, a label generator component 1292, a label encryption component 1294, and a digital certificate generator component 1296.

The processor 1252 may be the primary computational unit responsible for carrying out all calculations and operations, which may include executing the designated algorithms that realize the functions stipulated in the methods outlined above, managing inputs, and generating outputs. Memory 1254 may include RAM for temporary storage during computations and a hard drive or a solid-state drive for long-term storage needs. The memory 1254 may accommodate various data, such as those linked to food ingredients, retrieved EISS values, and critical algorithms. The NIC 1256 may form the principal connection point between the system and the internet, linking the system to the cloud-based food ingredient repository, and enabling data retrieval and digital EISS label transfer for display. The I/O ports 1258 may connect various peripheral devices like a monitor or electronic display, keyboard, and printer.

The operating system 1260 may manage hardware resources and provide services for software applications. The custom EISS application software 1262 may be specially designed to implement the algorithm of the methods described above, including the specialized components 1270-1296 for receiving food item descriptions, determining food ingredients, accessing the food ingredient repository, calculating EISS values, generating the digital EISS label, etc. The custom EISS network software 1264 may manage network connections for internet-based tasks such as retrieving data from the cloud-based food ingredient repository and transmitting the EISS label. The custom EISS security software 1266 may include specialized security software designed to offer unique encryption and safeguard against potential cyber threats.

The following paragraphs describe various embodiments of how the various components in the EIS server 1204 may be configured to perform operations related to the determination of EISS, from receiving a digital food item description and parsing it to determine constituent food ingredients to generating a digital EISS label containing the food item EISS value. The configurations include adjusting EISS values based on different factors, determining operational parameters or score calculations, generating reports based on determined information, and providing detailed explanations of carbon dioxide emissions, water consumption, energy consumption, etc. As an example, the EIS server 1204 may be configured to receive a digital food item description via the NIC 1256 and store it in memory 1252. The processor 1252 may parse the food item description using the custom software application to determine constituent food ingredients. The EIS server 1204 may access the cloud-based food ingredient repository via the NIC 1256 to retrieve environmental and sustainability data for the determined ingredients. The processor 1252 may calculate an EISS value for each ingredient and aggregates these to determine an overall EISS value for the food item. The processor 1252 may then generate a digital EISS label containing the food item EISS value and store it in memory 1254. The EIS server 1204 may transmit the digital EISS label via the NIC 1256 for display.

It should be understood that in some embodiments the EIS server 1204 may be configured to perform any or all of the operations of any of the methods (e.g., methods 300, 500, 800, 1000, 1120, 1140, 1160, etc.) discussed in this application. As an example, in some embodiments, the food item description component 1270 of the EIS server 1204 may determine EISS of a food item by receiving a food item description, the food ingredient retriever component 1272 may determine one or more food ingredients based on the received food item description, the food ingredient EISS value generator component 1278 may determine a food ingredient EISS value for each of the determined food ingredients based on information retrieved from a food ingredient repository, the food item EISS value generator component 1280 may determine a food item EISS value based on the determined food ingredient EISS values, and the label generator component 1292 may generate an EISS label based on the determined food item EISS value.

In some embodiments, the EIS server 1204 may be configured to receive a food ingredient description in the food ingredient retriever component 1272, extract details of the food ingredient from the food ingredient description in the food ingredient extractor component 1274, analyze the extracted food ingredient details in food ingredient analyzer component 1276, determine EISS values for the food ingredients in the food ingredient EISS value generator component 1278 or retrieve matching food ingredients and their associated EISS values from one or more food ingredient repositories in the matching food ingredient EISS retriever component 1282, iterate through each of the unprocessed food ingredients to determine a match level using match rules in the food ingredient matcher component 1284, select the food ingredient with the highest match level after all matching food ingredients have been processed in the food ingredient selector component 1286, and adjust the EISS values of the selected food ingredient based on the match level, variations, preparations, quantity, locations, source of information, and/or the age of the information relating to the food ingredient in the food ingredient adjuster component 1288. In some embodiments, the EIS server 1204 may generate a label information structure based on the adjusted EISS value in the label generator component 1292, encrypt the label information structure in the label encryption component 1294, and/or generate an encrypted EISSDC in the digital certificate generator component 1296.

In some embodiments, the EIS server 1204 may be configured to receive a food item description, extract food ingredient details and/or food item preparations from the food item description, determine the EISS values for each food ingredient, store the food ingredient and its associated EISS values in memory and/or in the requester's profile, analyze ingredient descriptions for consistency, set triggers for generating alerts in response to detecting inconsistencies in the ingredient descriptions, and determine a total EISS value by aggregating and normalizing EISS scores across all food ingredients (e.g., in the EISS aggregator component 1290, etc.).

In some embodiments, the EIS server 1204 may be configured to determine operational parameters or score calculations, adjust the EISS values based on the preparation methods of the food item, the quantity of overproduction, end-of-life handling, packaging details, logistics, destination location, a distance of transportation, multi-hop distributions, etc., store the adjusted EISS values in memory, compute a quality metric, determine whether the quality metric is below a threshold value, display the quality metric, details of its calculation, areas for improvement, etc. in response to determining that the quality metric is not below the threshold value, and/or exit or terminate further processing in response to determining that the quality metric is below the threshold value. In some embodiments, the EIS server 1204 may generate a label information structure based on the adjusted EISS values and/or quality metrics, encrypt the label information structure, and/or generate an encrypted EISSDC based on the adjusted EISS values and/or quality metrics.

In some embodiments, the EIS server 1204 may be configured to determine relevant unit types and environmental impact and sustainability factors, adjust the EISS values based on determined unit types and factors, determine label format(s), and generate EISS labels based on determined label formats. In some embodiments, the EIS server 1204 may determine the total cost of the food item, a recommended retail price, greenhouse gas emissions, etc., generate a report based on the determined information, determine whether the food item complies with regulatory standards or legislative requirements, update the EISS values and/or generate a label based on the report and/or compliance with regulatory standards or legislative requirements, display the updated EISS values or generated label, report, and/or compliance information to the requester, and/or send the updated EISS values or generated label, report, and/or compliance information to a third party.

In various embodiments, the EIS server 1204 may be further configured to generate and display detailed explanations of carbon dioxide emissions, water consumption, energy consumption, etc., generate and display equivalency examples (e.g., shower time for water consumption, car distance travelled for carbon dioxide emissions, etc.), continuously or repeatedly generate and display scores for other food items, and/or determine or update EISS value as ingredients are added, modified, and/or removed.

In some embodiments, the EIS server 1204 may be configured to determine the food items of interest for the report, determine a date range of interest (e.g., set the date range for which the EISS values should be retrieved, etc.), determine report parameters (e.g., format, detail level, delivery method for the report, etc.), retrieve all EISS values for the food items of interest within the specified date range, generate a report based on the retrieved information and determined parameters, set triggers for alerts to be sent when scores for a food item are updated, send the report to the requester or a third party if the defined thresholds have been met, and/or compare EISS value from two or more similar or identical products from different manufacturers.

In some embodiments, the EIS server 1204 may be configured to receive a food item identity or description, determine target EISS values for the food item, determine adjustment criteria to be considered for improving the EISS values, analyze the complete food item (and accounting for changes to preparations, packaging, logistics, locations, etc.), analyze food ingredients individually (e.g., analyze each ingredient in the food item to account for whether selecting alternative ingredients or variations, changing preparation, changing quantity, or changing locations may improve the scores, etc.), and generate a report that includes one or more options for improving the EISS values for the food item. In some embodiments, the EIS server 1204 may generate the report to identify the food items or ingredients that meet or exceed the target EISS values, to includes the cost of each item in the report, to rank multiple available options (e.g., by increasing cost, etc.).

It should be understood that in any or all of the embodiments discussed above, the EIS server 1204 may generate a label information structure based on the EISS values and encrypt the label information structure. It should be understood that in any or all of the embodiments discussed above, a label may be an encrypted label information structure or an encrypted EISSDC. The EIS server 1204 may determine how the requester wants to use the labels, publish the labels for the requester to download and save, integrate labels into larger or complete food item labels, send labels to a printer for printing, send labels electronically to a third party, upload the labels to an electronic menu display system for in-premise display, upload labels to a website or similar web server for online display, and/or associate the labels (e.g., encrypted EISSDC, etc.) with specific instances of the food item.

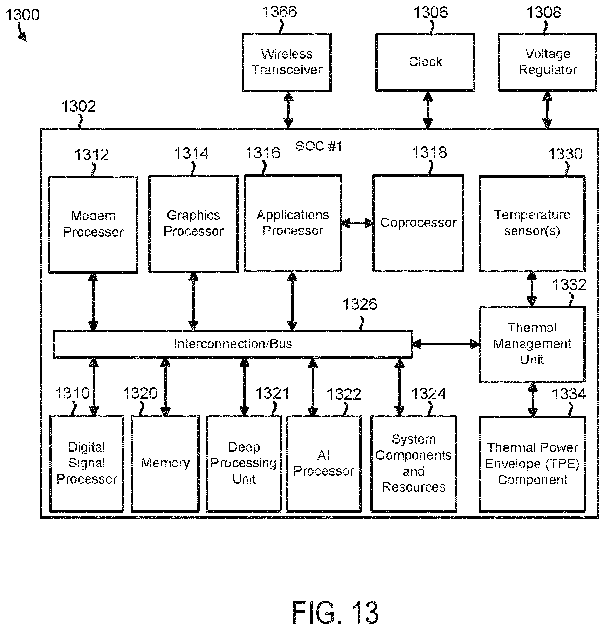

Various embodiments may be implemented on a number of single-processor and multiprocessor computer systems, including a system-on-chip (SOC) or system in a package (SIP). FIG. 13 illustrates an example computing system 1300 architecture that may be used in a computing system implementing the various embodiments.

The example SOC 1300 illustrated in FIG. 13 includes SOC 1302, a clock 1306, a voltage regulator 1308, and wireless transceiver 1366. The SOC 1302 may communicate via interconnection/bus module 1350. The various processors 1310, 1312, 1314, 1316, 1318, 1321, 1322, may be interconnected to each other and to one or more memory elements 1320, system components and resources 1324 and a thermal management unit 1332 via an interconnection/bus module 1326. The interconnection/bus module 1326 may include an array of reconfigurable logic gates and/or implement a bus architecture (e.g., Core Connect, AMBA, etc.). Communications may be provided by advanced interconnects, such as high-performance networks-on-chip (NoCs).

In some embodiments, the SOC 1302 may operate as the central processing unit (CPU) of the mobile computing device that carries out the instructions of software application programs by performing the arithmetic, logical, control and input/output (I/O) operations specified by the instructions. In some embodiments, the modem processor 1312 may operate as a specialized 5G processing unit responsible for managing high volume, high speed (e.g., 5 Gbps, etc.), and/or very high-frequency short wavelength (e.g., 28 GHz mmWave spectrum, etc.) communications.

The SOC 1302 may include a digital signal processor (DSP) 1310, a modem processor 1312, a graphics processor 1314, an application processor 1316, one or more coprocessors 1318 (e.g., vector co-processor) connected to one or more of the processors, memory 1320, deep processing unit (DPU) 1321, artificial intelligence processor 1322, system components and resources 1324, an interconnection/bus module 1326, one or more temperature sensors 1330, a thermal management unit 1332, and a thermal power envelope (TPE) component 1334.

Each processor 1310, 1312, 1314, 1316, 1318, 1321, 1322, 1321, 1322 may include one or more cores, and each processor/core may perform operations independent of the other processors/cores. For example, the first SOC 1302 may include a processor that executes a first type of operating system (e.g., FreeBSD, LINUX, OS X, etc.) and a processor that executes a second type of operating system (e.g., MICROSOFT WINDOWS 10). In addition, any or all of the processors 1310, 1312, 1314, 1316, 1318, 1321, 1322, 1352, 1360 may be included as part of a processor cluster architecture (e.g., a synchronous processor cluster architecture, an asynchronous or heterogeneous processor cluster architecture, etc.).

Any or all of the processors 1310, 1312, 1314, 1316, 1318, 1321, 1322 may operate as the CPU of the mobile computing device. In addition, any or all of the processors 1310, 1312, 1314, 1316, 1318, 1321, 1322, 1352, 1360 may be included as one or more nodes in one or more CPU clusters. A CPU cluster may be a group of interconnected nodes (e.g., processing cores, processors, SOCs, SOCs, computing devices, etc.) configured to work in a coordinated manner to perform a computing task. Each node may run its own operating system and contain its own CPU, memory, and storage. A task that is assigned to the CPU cluster may be divided into smaller tasks that are distributed across the individual nodes for processing. The nodes may work together to complete the task, with each node handling a portion of the computation. The results of each node's computation may be combined to produce a final result. CPU clusters are especially useful for tasks that can be parallelized and executed simultaneously. This allows CPU clusters to complete tasks much faster than a single, high-performance computer. Additionally, because CPU clusters are made up of multiple nodes, they are often more reliable and less prone to failure than a single high-performance component.

The SOC 1302 may include various system components, resources, and custom circuitry for managing sensor data, analog-to-digital conversions, wireless data transmissions, and for performing other specialized operations, such as decoding data packets and processing encoded audio and video signals for rendering in a web browser. For example, the system components and resources 1324 of the first SOC 1302 may include power amplifiers, voltage regulators, oscillators, phase-locked loops, peripheral bridges, data controllers, memory controllers, system controllers, Access ports, timers, and other similar components used to support the processors and software clients running on a mobile computing device. The system components and resources 1324 may also include circuitry to interface with peripheral devices, such as cameras, electronic displays, wireless communication devices, external memory chips, etc.

The SOC 1302 may further include an input/output module (not illustrated) for communicating with resources external to the SOC, such as a clock 1306, a voltage regulator 1308, and a wireless transceiver 1366 (e.g., cellular wireless transceiver, Bluetooth transceiver, etc.). Resources external to the SOC (e.g., clock 1306, voltage regulator 1308, wireless transceiver 1366) may be shared by two or more of the internal SOC processors/cores.

In addition to the example SOC 1300 discussed above, various embodiments may be implemented in a wide variety of computing systems, which may include a single processor, multiple processors, multicore processors, or any combination thereof.

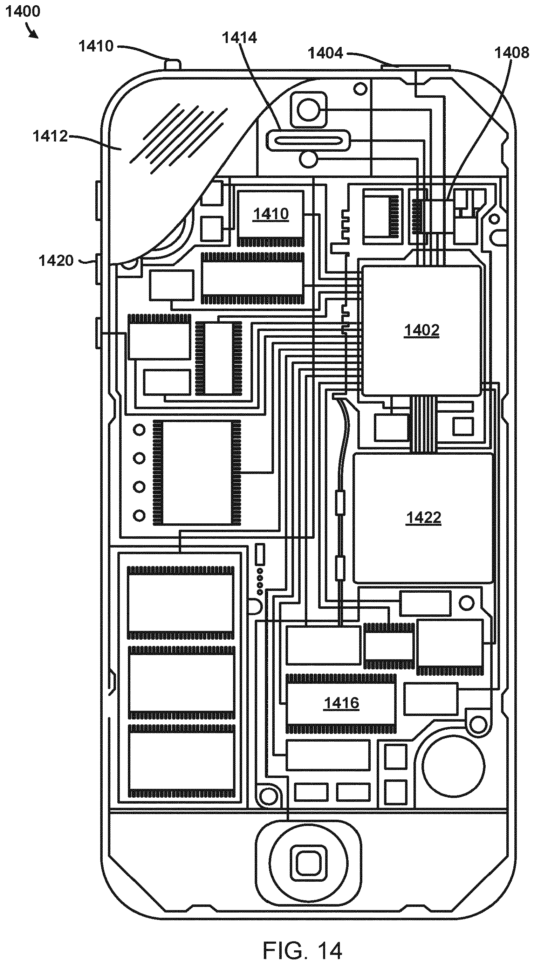

Various embodiments (including, but not limited to, embodiments described above with reference to FIGs. 1-13) may be implemented in mobile computing devices, an example of which suitable for use with the various embodiments is illustrated in FIG. 14 as a UE. The UE 1400 may include a processor 1402 coupled to a touchscreen controller 1404 and an internal memory 1406. The processor 1402 (e.g., SOC 1302, etc.) may be one or more multicore integrated circuits designated for general or specific processing tasks. The internal memory 1406 may be volatile or non-volatile memory and may also be secure and/or encrypted memory, or unsecure and/or unencrypted memory, or any combination thereof. Examples of memory types that can be leveraged include but are not limited to DDR, LPDDR, GDDR, WIDEIO, RAM, SRAM, DRAM, P-RAM, R-RAM, M-RAM, STT-RAM, embedded DRAM, non-volatile flash memory, UFS, SDCC, etc. The touchscreen controller 1404 and the processor 1402 may also be coupled to a touchscreen panel 1412, such as a resistive-sensing touchscreen, capacitive-sensing touchscreen, infrared sensing touchscreen, etc. Additionally, the display of the UE 1400 need not have touch screen capability.

The UE 1400 may have one or more radio signal transceivers 1408 (e.g., Peanut, Bluetooth, ZigBee, Wi-Fi, RF radio) and antennae 1410, for sending and receiving communications, coupled to each other and/or to the processor 1402. The transceivers 1408 and antennae 1410 may be used with the above-mentioned circuitry to implement the various wireless transmission protocol stacks and interfaces. The UE 1400 may include a cellular network wireless modem chip 1416 that enables communication via a cellular network and is coupled to the processor 1402.

The UE 1400 may include a peripheral device connection interface (not shown), which may be singularly configured to accept one type of connection or may be configured to accept various types of physical and communication connections, common or proprietary, such as Universal Serial Bus (USB), FireWire, Thunderbolt, or PCIe. The peripheral device connection interface may also be coupled to a similarly configured peripheral device connection port (not shown).

The UE 1400 may also include speakers 1414 for providing audio outputs. The UE 1400 may also include a housing, constructed of a plastic, metal, or a combination of materials, for containing all or some of the components described herein. The UE 1400 may include a power source 1422 coupled to the processor 1402, such as a disposable or rechargeable battery. The rechargeable battery may also be coupled to the peripheral device connection port to receive a charging current from a source external to the UE 1400. The UE 1400 may also include a physical button 1420 for receiving user inputs.

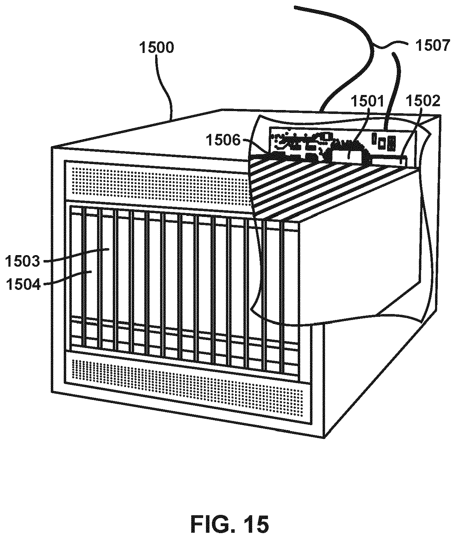

Some embodiments may be implemented on any of a variety of commercially available computing devices, such as the server computing device 1500 illustrated in FIG. 15. Such a server device 1500 may include a processor 1501 coupled to volatile memory 1502 and a large capacity nonvolatile memory, such as a disk drive 1503. The server device 1500 may also include a floppy disc drive, USB, etc. coupled to the processor 1501. The server device 1500 may also include network access ports 1506 coupled to the processor 1501 for establishing data connections with a network connection circuit 1504 and a communication network (e.g., IP network) coupled to other communication system network elements.

The processors discussed in this application may be any programmable microprocessor, microcomputer or multiple processor chip or chips that can be configured by software instructions (applications) to perform a variety of functions, including the functions of the various embodiments described above. In some devices, multiple processors may be provided, such as one processor dedicated to wireless communication functions and one processor dedicated to running other applications. Typically, software applications may be stored in the internal memory before they are accessed and loaded into the processors. The processors may include internal memory sufficient to store the application software instructions. In many devices, the internal memory may be a volatile or nonvolatile memory, such as flash memory, or a mixture of both. For the purposes of this description, a general reference to memory refers to memory accessible by the processors including internal memory or removable memory plugged into the device and memory within the processors themselves. Additionally, as used herein, any reference to a memory may be a reference to a memory storage and the terms may be used interchangeably.

Implementation examples are described in the following paragraphs. While some of the following implementation examples are described in terms of example methods, further example implementations may include: the example methods discussed in the following paragraphs implemented by a computing device including a processor configured with processor-executable instructions to perform operations of the methods of the following implementation examples; the example methods discussed in the following paragraphs implemented by a computing device including means for performing functions of the methods of the following implementation examples; and the example methods discussed in the following paragraphs may be implemented as a non-transitory processor-readable storage medium having stored thereon processor-executable instructions configured to cause a processor of a computing device to perform the operations of the methods of the following implementation examples.

Example 1: A method of determining an environmental impact and sustainability score (EISS) of a food item, the method including receiving, by a processor in a computing device, a food item description, determining one or more food ingredients based on the received food item description, determining a food ingredient EISS value for each of the determined food ingredients based on information retrieved from a food ingredient repository, determining a food item EISS value based on the determined food ingredient EISS values, and generating an EISS label based on the determined food item EISS value.

Example 2: The method of example 1, in which generating the EISS label based on the determined food item EISS value includes generating an encrypted label information structure and/or generating an environmental impact and sustainability score digital certificate (EISSDC).

Example 3: The method of any of the examples 1 or 2, in which generating the EISS label based on the determined food item EISS value includes generating the EISS label as a non-fungible token (NFT) and/or using a blockchain-based distributed ledger to secure the EISS label.

Example 4: The method of any of the examples 1-3, in which generating the EISS label based on the determined food item EISS value includes determining environmental impact and sustainability unit types relevant to a requester, determining label format associated with the requester, and generating the EISS label in the determined label format based on the determined food item EISS value and the determined environmental impact and sustainability unit types.

Example 5: The method of any of the examples 1-4, in which generating the EISS label based on the determined food item EISS value includes determining a total cost of the food item based on cost information associated with each of the determined food ingredients, quantity information associated with each of the determined food ingredients, and one or more environmental impact and sustainability factors relating to energy consumption associated with the food item, and generating the EISS label to include the determined total cost of the food item.

Example 6: The method of any of the examples 1-5, further including uploading the food item EISS label to a website or web server, in which the uploaded food item EISS label causes the website or web server to verify the authenticity of the item EISS label and automatically include the food item EISS label in an electronic listing in response to verifying the authenticity of the item EISS label.

Example 7: The method of any of the examples 1-6, in which determining the food ingredient EISS value for each of the determined food ingredients based on information retrieved from the food ingredient repository includes querying the food ingredient repository to retrieve matching food ingredients and EISS values associated with the matching food ingredients, applying one or more match rules to determine match levels for the retrieved matching food ingredients, and selecting the retrieved matching food ingredients with the highest match levels.

Example 8: The method of any of example 7, in which applying the match rules to determine the match levels for the retrieved matching food ingredients includes applying at least two match rules that are cumulative and weighted.

Example 9: The method of any of the examples 1-8, in which determining the one or more food ingredients based on the received food item description further includes extracting food ingredient details from the determined food ingredients, parsing and segmenting the food ingredient details, and using the parsed and segmented food ingredient details to determine a food ingredient type, a food ingredient subtype, a food ingredient variation, a food ingredient preparation, a food ingredient quantity, or a food ingredient origin location, or using a machine learning technique in conjunction with image-based text analysis to determine the food ingredient type, the food ingredient subtype, the food ingredient variation, the food ingredient preparation, the food ingredient quantity, or the food ingredient origin location.

Example 10: The method of any of the examples 1-9, in which determining the food ingredient EISS value for each of the determined food ingredients based on information retrieved from the food ingredient repository includes adjusting the food ingredient EISS values based on a match level, a food ingredient variation, a food ingredient preparation, a food ingredient quantity, or a food ingredient location.

Example 11: The method of any of the examples 1-10, in which determining the food item EISS value based on the determined food ingredient EISS values further includes generating an alert in response to determining that a description of at least one of the food ingredients is not consistent or in response to determining that a quality metric of the food item EISS value is below a threshold value.

Example 12: The method of any of the examples 1-11, in which determining the food item EISS value based on the determined food ingredient EISS values further includes adjusted a food item mass value, a food item water consumption value, and a food item energy consumption value in response to determining that a food item preparation value indicates that the food item was cooked, and adjusting the food item EISS value based on the adjusted food item mass value, the adjusted food item water consumption value, and the adjusted food item energy consumption value.

Example 13: The method of any of the examples 1-13, in which determining the food item EISS value based on the determined food ingredient EISS values includes determining food item EISS value based on a gaseous emissions value, an energy consumption value, a water consumption value, a packaging value, a plastic content value, a biodiversity impact value, a fair trade value, an ethnical production value, a toxins value, an overproduction value, or an end-of-life handling value, or adjusting the food item EISS value based on a food item preparation, a food item packaging, a food item logistic, or a food item location.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

As used in this application, the terms "component," "system," and the like may refer to a computer-related entity (e.g., hardware, firmware, a combination of hardware and software, software, software in execution, etc.) that is configured to perform particular operations or functions. For example, a component may be, but is not limited to, a process running on a processor, a processor, an object, an executable, a thread of execution, a program, and/or a computing device. By way of illustration, both an application running on a computing device and the computing device may be referred to as a component. One or more components may reside within a process and/or thread of execution and a component may be localized on one processor or core and/or distributed between two or more processors or cores. In addition, these components may execute from various non-transitory computer readable media having various instructions and/or data structures stored thereon. Components may communicate by way of local and/or remote processes, function or procedure calls, electronic signals, data packets, memory read/writes, and other known computer, processor, and/or process related communication methodologies.

Any references to terminology and/or technical details related to an individual wired or wireless communications standard or technology are for illustrative purposes only, and not intended to limit the scope of the claims to a particular communication system or technology unless specifically recited in the claim language.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The hardware used to implement the various illustrative logics, logical blocks, modules, components, and circuits described in connection with the embodiments disclosed herein may be implemented or performed with a general-purpose processor, a digital signal processor (DSP), an application-specific integrated circuit (ASIC), a field programmable gate array (FPGA) or other programmable logic devices, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some steps or methods may be performed by circuitry that is specific to a given function.

In one or more exemplary embodiments, the functions described may be implemented in hardware, software, firmware, or any combination thereof. If implemented in software, the functions may be stored as one or more instructions or code on a non-transitory computer-readable medium or non-transitory processor-readable medium. The steps of a method or algorithm disclosed herein may be embodied in a processor-executable software module and/or processor-executable instructions, which may reside on a non-transitory computer-readable or non-transitory processor-readable storage medium. Non-transitory server-readable, computer-readable or processor-readable storage media may be any storage media that may be accessed by a computer or a processor. By way of example but not limitation, such non-transitory server-readable, computer-readable or processor-readable media may include RAM, ROM, EEPROM, FLASH memory, CD-ROM or other optical disk storage, magnetic disk storage or other magnetic storage devices, or any other medium that may be used to store desired program code in the form of instructions or data structures and that may be accessed by a computer. Disk and disc, as used herein, includes compact disc (CD), laser disc, optical disc, DVD, floppy disk, and Blu-ray disc where disks usually reproduce data magnetically, while discs reproduce data optically with lasers. Combinations of the above are also included within the scope of non-transitory server-readable, computer-readable and processor-readable media. Additionally, the operations of a method or algorithm may reside as one or any combination or set of codes and/or instructions on a non-transitory server-readable, processor-readable medium and/or computer-readable medium, which may be incorporated into a computer program product.

The preceding description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the invention. Thus, the present invention is not intended to be limited to the embodiments shown herein but is to be accorded the widest scope consistent with the following claims and the principles and novel features disclosed herein.

## Claims

1. A method of determining an environmental impact and sustainability score (EISS) of a food item, the method comprising:
receiving, by a processor in a computing device, a food item description;
determining one or more food ingredients based on the received food item description;
determining a food ingredient EISS value for each of the determined food ingredients based on information retrieved from a food ingredient repository;
determining a food item EISS value based on the determined food ingredient EISS values; and
generating an EISS label based on the determined food item EISS value.

2. The method of claim 1, wherein generating the EISS label based on the determined food item EISS value comprises:
generating an encrypted label information structure; or
generating an environmental impact and sustainability score digital certificate (EISSDC).

3. The method of claim 1 or 2, wherein generating the EISS label based on the determined food item EISS value comprises:
generating the EISS label as a non-fungible token (NFT); or
using a blockchain-based distributed ledger to secure the EISS label.

4. The method of any one of claims 1 to 3, wherein generating the EISS label based on the determined food item EISS value comprises:
determining environmental impact and sustainability unit types relevant to a requester;
determining label format associated with the requester; and
generating the EISS label in the determined label format based on the determined food item EISS value and the determined environmental impact and sustainability unit types.

5. The method of any one of claims 1 to 4, wherein generating the EISS label based on the determined food item EISS value comprises:
determining a total cost of the food item based on cost information associated with each of the determined food ingredients, quantity information associated with each of the determined food ingredients, and one or more environmental impact and sustainability factors relating to energy consumption associated with the food item; and
generating the EISS label to include the determined total cost of the food item.

6. The method of any one of claims 1 to 5, further comprising uploading the food item EISS label to a website or web server, wherein the uploaded food item EISS label causes the website or web server to verify the authenticity of the item EISS label and automatically include the food item EISS label in an electronic listing in response to verifying the authenticity of the item EISS label.

7. The method of any one of claims 1 to 6, wherein determining the food ingredient EISS value for each of the determined food ingredients based on information retrieved from the food ingredient repository comprises:
querying the food ingredient repository to retrieve matching food ingredients and EISS values associated with the matching food ingredients;
applying one or more match rules to determine match levels for the retrieved matching food ingredients; and
selecting the retrieved matching food ingredients with the highest match levels.

8. The method of claim 7, wherein applying the match rules to determine the match levels for the retrieved matching food ingredients comprises applying at least two match rules that are cumulative and weighted.

9. The method of any one of claims 1 to 8, wherein determining the one or more food ingredients based on the received food item description further comprises using a machine learning technique in conjunction with image-based text analysis to determine:
a food ingredient type;
a food ingredient subtype;
a food ingredient variation;
a food ingredient preparation;
a food ingredient quantity; or
a food ingredient origin location.

10. The method of any one of claims 1 to 9, wherein determining the food ingredient EISS value for each of the determined food ingredients based on information retrieved from the food ingredient repository comprises adjusting the food ingredient EISS values based on:
a match level;
a food ingredient variation;
a food ingredient preparation;
a food ingredient quantity; or
a food ingredient location.

11. The method of any one of claims 1 to 10, wherein determining the food item EISS value based on the determined food ingredient EISS values further comprises generating an alert in response to determining that a description of at least one of the food ingredients is not consistent or in response to determining that a quality metric of the food item EISS value is below a threshold value.

12. The method of any one of claims 1 to 11, wherein determining the food item EISS value based on the determined food ingredient EISS values further comprises:
adjusted a food item mass value, a food item water consumption value, and a food item energy consumption value in response to determining that a food item preparation value indicates that the food item was cooked; and
adjusting the food item EISS value based on the adjusted food item mass value, the adjusted food item water consumption value, and the adjusted food item energy consumption value.

13. The method of any one of claims 1 to 12, wherein determining the food item EISS value based on the determined food ingredient EISS values comprises:
determining food item EISS value based on:
a gaseous emissions value;
an energy consumption value;
a water consumption value;
a packaging value;
a plastic content value;
a biodiversity impact value;
a fair trade value;
an ethnical production value;
a toxins value;
an overproduction value; or
an end-of-life handling value; or
adjusting the food item EISS value based on:
a food item preparation;
a food item packaging;
a food item logistic; or
a food item location.

14. A non-transitory computer readable storage medium having stored thereon processor-executable software instructions configured to cause a processor to perform operations for determining an environmental impact and sustainability score (EISS) of a food item, the operations comprising:
receiving a food item description;
determining one or more food ingredients based on the received food item description;
determining a food ingredient EISS value for each of the determined food ingredients based on information retrieved from a food ingredient repository;
determining a food item EISS value based on the determined food ingredient EISS values; and
generating an EISS label based on the determined food item EISS value.

15. A computing device, comprising:
a processor configured to:
receive a food item description;
determine one or more food ingredients based on the received food item description;
determine a food ingredient environmental impact and sustainability score (EISS) value for each of the determined food ingredients based on information retrieved from a food ingredient repository;
determine a food item EISS value based on the determined food ingredient EISS values; and
generate an EISS label based on the determined food item EISS value.
